# EUROPÄISCHE PATENTSCHRIFT

(11) **EP 1 232 346 B1**
(45) Veröffentlichungstag und Bekanntmachung des Hinweises auf die Patenterteilung: **05.03.2008**
(21) Anmeldenummer: 01978275.4
(22) Anmeldetag: 14.08.2001
(51) Int. Cl.: F16D 55/226

(54) **SCHEIBENBREMSE MIT EINER NACHSTELL-EINRICHTUNG AUF JEDER SEITE DER BREMSSCHEIBE**
DISC BRAKE WITH AN ADJUSTING SYSTEM ON EACH SIDE OF THE BRAKE DISC
FREIN A DISQUE POURVU D'UN SYSTEME DE REGLAGE A CHAQUE COTE DE DISQUE DE FREIN

(30) Priorität: 17.08.2000 DE 10040175; 26.04.2001 DE 10120328
(43) Veröffentlichungstag der Anmeldung: 21.08.2002
(60) Teilanmeldung: 05016137.1
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE); BIEKER, Dieter, 83080 Oberaudorf (DE); PAHLE, Wolfgang, 83707 Bad Wiessee (DE)
(74) Vertreter: Mattusch, Gundula
(86) Internationale Anmeldenummer: PCT/EP2001/009371
(87) Internationale Veröffentlichungsnummer: WO 2002/014710

(56) Entgegenhaltungen:
- EP-A- 0 942 191
- EP-A- 0 995 923
- WO-A-96/36819
- DE-A- 3 332 548
- FR-A- 1 547 063
- US-A- 3 059 731
- US-A- 3 371 753
- US-A- 3 498 421
- US-A- 4 784 244
- US-A- 5 439 078

## Beschreibung

Die Erfindung betrifft eine Scheibenbremse nach dem Oberbegriff des Anspruchs 1.

Eine gattungsgemäße Scheibenbremse ist aus der EP-A-0 995 923 bekannt, die eine pneumatisch betätigte Scheibenbremse mit elektrischem Nachsteller zeigt.

Die Erfindung beschäftigt sich insbesondere mit neuartigen Konstruktionen von Scheibenbremsen, insbesondere für Nutzfahrzeuge, welche pneumatisch und/oder elektromechanisch betätigt werden.

Scheibenbremsen lassen sich nach dem gewählten Prinzip der Krafteinleitung in zwei Grundbauarten einteilen:
1. Krafterzeugung und Verschleißnachstellung beiderseits der Bremsscheibe: z.B. hydraulische Festsattelscheibenbremse mit axial fixierter Bremsscheibe und Krafterzeugung beidseits der Bremsscheibe, sowie
2. Krafterzeugung und Verschleißnachstellung auf einer Seite der Bremsscheibe und Übertragung der Betätigungskraft auf die abgewandte Seite nach dem Reaktionskraftprinzip: z.B. Schiebesattelscheibenbremse, Schwenksattelscheibenbremse, Festsattelscheibenbremse mit verschiebbarer Bremsscheibe.

Druckluftbetätigte Scheibenbremsen für schwere Nutzfahrzeuge mit Felgendurchmessern von 15Zoll und mehr nutzen üblicherweise das Reaktionskraftprinzip, da aufgrund der beengten Einbauverhältnisse am Fahrzeugrad die Anordnung eines Druckluft- Betätigungszylinders nur auf der zur Fahrzeuginnenseite offenen Seite des Fahrzeugrades möglich ist. Derartige Konstruktionen zeigen z.B. die DE 36 10 569 A1, die DE 37 16 202 A1, die EP 0 531 321 A1 (siehe hier insbesondere die Konstruktion der Nachsteller nach Art von Drehantrieben) und die EP 0 688 404 A1.

Schiebesattel oder Schwenksattel-Scheibenbremsen benötigen ein achsfestes Bauteil - i.allg. Bremsträger genannt - welches die Bremsschuhe/Bremsbeläge hält bzw. führt und bei Bremsbetätigung deren Umfangskräfte aufnimmt sowie den koaxial zur Fahrzeugachse verschiebbar gelagerten Bremssattel trägt.

Die Relativbewegung, welche der Bremssattel gegen das achsfeste Bauteil ausführt, läßt sich in den Arbeitshub und den Verschleißhub unterteilen. Diesen Effekt macht sich die Erfindung in überraschender Weise zu Nutze.

Der Arbeitshub wird bei jeder Bremsbetätigung ausgeführt, um das Lüftspiel der Bremse zu überwinden und die bei der Kraftaufbringung entstehenden Elastizitäten von Bremsbelägen und Bremssattel auszugleichen. Er beträgt - je nach Höhe der Betätigungskraft und der Größe des Lüftspiels - üblicherweise < 4 mm.

Der Verschleißhub ist dagegen der Verschleißnachstellweg, den der Sattel über eine große Anzahl von Bremsbetätigungen ausführt, um den Verschleiß an der Reaktionsseite der Bremse auszugleichen. Der Verschleißhub setzt sich aus dem Verschleiß des außen liegenden Bremsbelages und der außen liegenden Bremsscheibenreibfläche zusammen und beträgt üblicherweise bis zu 25mm.

Bei der Bremsenbauart mit einem Festsattel und einer verschiebbaren Bremsscheibe werden dagegen Arbeitshub und Verschleißhub durch Verschieben der Bremsscheibe erzeugt.

Die Bauarten mit Schiebe - oder Schwenksattel haben den Nachteil, daß der achsfeste Bremsträger zur Umfangskraftaufnahme der Bremsbacken und Halterung und Führung des Bremssattels benötigt wird. Durch dieses Bauteil entstehen zusätzliche Kosten und zusätzliches Gewicht. Zudem ist das benötigte Schiebeführungs- bzw. Schwenksystem störungsanfällig.

Bei der Bauart mit verschiebbarer Bremsscheibe besteht dagegen das Problem, die Bremsscheibe auf dem Führungsbereich der Nabe über die ganze Lebensdauer leicht schiebbar zu halten. Eine wirkungsvolle Abdichtung ist aufgrund der beengten Einbauverhältnisse und der harten Umgebungsbeanspruchung kaum realisierbar.

Die Erfindung setzt vor diesem Hintergrund bei der an, die Vorteile der vorstehend beschrieben Bremssattelkonzepte miteinander zu kombinieren und löst von daher u.a. die Aufgabe, den Aufbau der Scheibenbremse zu vereinfachen und ihr Gesamtgewicht relativ zu Schiebesattelbremsen zu reduzieren.

Diese Aufgabe löst die Erfindung durch den Gegenstand des Anspruchs 1.

Schließlich wird nach einer - auch unabhängig zu betrachtenden - weiteren Variante Damit wird der Aufbau der Zuspanneinrichtung an sich vereinfacht.

Vorteilhafte Ausgestaltungen sind den Unteransprüchen zu entnehmen.

Nachfolgend werden Ausführungsbeispiele der Erfindung unter Bezug auf die Zeichnung näher erläutert. Es zeigt:
- Fig. 1a-f: schnittartige Prinzipskizzen verschiedener Arten von Scheibenbremsen;
- Fig. 2a,b: zwei Teilschnitte senkrecht und parallel zur Bremsscheibe durch ein zweites Ausführungsbeispiel einer erfindungsgemäßen Scheibenbremse;
- Fig. 3a,b: zwei Teilschnitte senkrecht und parallel zur Bremsscheibe durch ein drittes Ausführungsbeispiel einer erfindungsgemäßen Scheibenbremse;
- Fig. 4: eine perspektivische Ansicht eines Nachstellermodules;
- Fig. 5: eine weitere perspektivische Ansicht des Nachstellermodules aus Fig. 4;
- Fig. 6a,b: eine perspektivische Ansicht eines weiteren Nachstellermodules, wobei in Fig. 6 eine der Montageplatten abgenommen wurde;
- Fig. 7: eine Sprengansicht einer Zuspanneinrichtung;
- Fig. 8a-c;a'-c': weitere Ansichten und Schnitte der Zuspanneinrichtung aus Fig. 7;
- Fig. 9: eine perspektivische Darstellung eines Teiles eines Drehhebels für Zuspanneinrichtungen nach Art der Fig. 7;
- Fig. 10: eine Draufsicht und vier Schnitte durch den Drehhebel nach Art der Fig. 9;
- Fig. 11: eine vormontierbare Zuspanneinheit aus Nachstellermodul und Drehhebel bestehend;
- Fig. 12, 13: eine perspektivische Ansicht eines reaktionsseitigen Teiles eines zweiteiligen Bremssattels und eine perspektivische Ansicht des zuspannseitigen Sattelteiles;
- Fig. 14, 15: Schnittansichten von Schwenksattel-Scheibenbremsen;
- Fig. 16: eine perspektivische Ansicht einer weiteren Scheibenbremse;
- Fig. 17-19: Schnittdarstellungen von Variationen der Anordnung der Lagerkugeln am Drehhebel und an den angrenzenden Bauelementen;
- Fig. 20a-f: weitere schnittartige Prinzipskizzen der Scheibenbremsen aus Fig. 1;
- Fig. 20g, h: weitere Scheibenbremsen;
- Fig. 21: verschiedene Ansichten und Varianten von Scheibenbremsen nach Art der Fig. 20f;
- Fig. 22-26: verschiedene Ansichten und Schnitten einer weiteren Scheibenbremse;
- Fig. 27: ein Nachstellmodul für die Bremse aus Fig. 22 - 26.

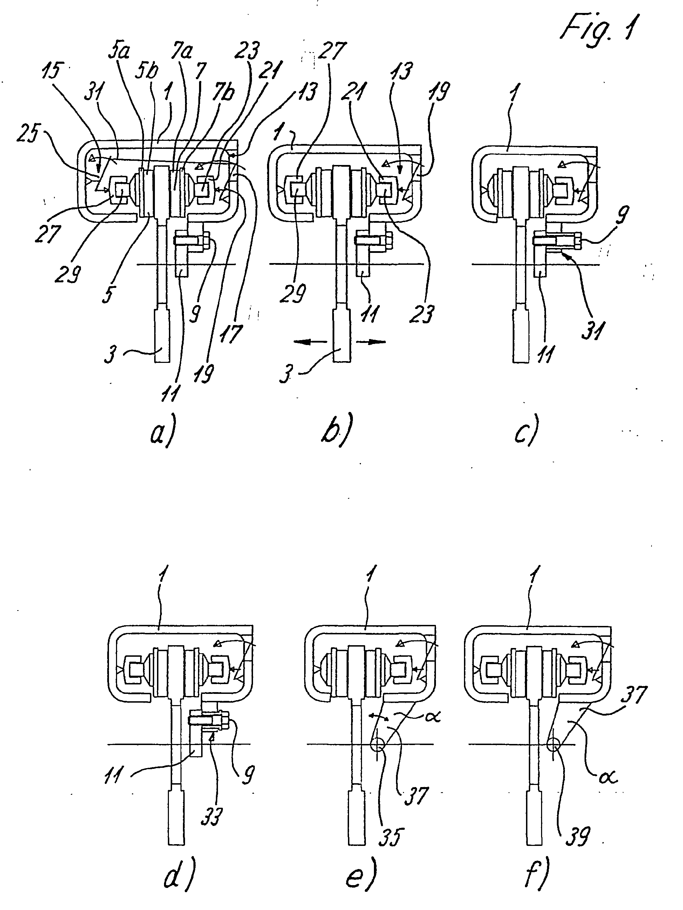

Fig. 1a zeigt eine Scheibenbremse, die einen Bremssattel 1 aufweist, welcher eine Bremsscheibe 3 in ihrem oberen Umfangsbereich umfaßt. Beidseits der Bremsscheibe 3 sind in Richtung der Bremsscheibe und von dieser weg - d.h., senkrecht zur Ebene der Bremsscheibe 3 - verschiebliche Bremsbeläge 5, 7 angeordnet, die in üblicher Weise aus einem Bremsbelagträger 5a, 7a und dem darauf aufgebrachten Belagmaterial 5b, 7b bestehen.

Der Bremssattel 1a ist an einer Seite der Bremsscheibe (in Fig. 1 rechts) in seinem unteren Abschnitt, welcher sich im wesentlichen senkrecht zur Bremsscheibe zu dieser hin nach innen erstreckt, mit wenigstens einem oder mehreren Bolzen 9 entweder direkt an einem Achsflansch 11 der Fahrzeugachse (ansonsten hier nicht abgebildet) oder über einen Zwischenflansch (hier nicht abgebildet) am Achsflansch 11 befestigbar.

Der Bremssattel 1 ist relativ zum Achsflansch 11 unverschiebbar, es handelt sich damit um einen sogenannten Festsattel. Da der Bremssattel 1 relativ zum Achsflansch 11 unverschiebbar ist, benötigt er beidseits er Bremsscheibe Zuspanneinrichtungen 13, 15 zum Zuspannen (und Lösen) der Bremsbeläge 5, 7 in Richtung der Bremsscheibe 3.

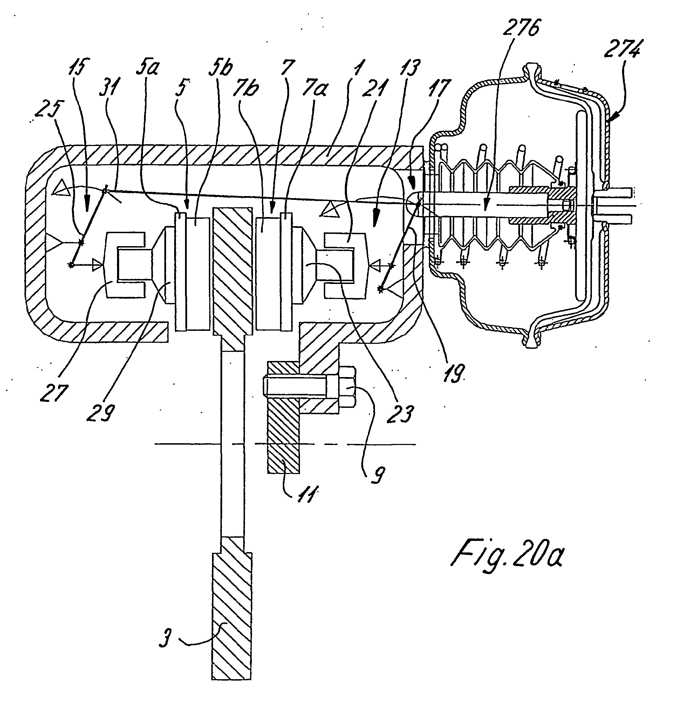

An seiner in Fig. 1a rechten oberen Seite weist der Bremssattel eine Öffnung 17 für eine (hier nicht dargestellte) Kolbenstange 276 eines (hier ebenfalls nicht dargestellten) Bremszylinders 274 (vorzugsweise pneumatisch) oder einer elektromechanischen Antriebseinrichtung auf (siehe auch Fig. 20a).

Die Kolbenstange wirkt auf einen - vorzugsweise exzentrisch - am Bremssattel 1 gelagerten Drehhebel 19, welcher dazu ausgelegt ist, (direkt über entsprechende Ansätze oder aber ggf. über weitere, hier nicht dargestellte, sich aber beispielhaft aus den weiteren Fig. ergebende Bauelemente) mittels wenigstens einer Nachstell-Dreheinrichtung einer Nachstellhülse 21, in welcher ein Druckstück verschraubbar angeordnet ist den einen - hier den rechten - Bremsbelag 7 in Richtung der Bremsscheibe 3 vorzuschieben.

Zum Rückstellen des Bremsbelages kann eine Rückstellfeder dienen (in Fig. 1 nicht dargestellt).

Da sowohl die Bremsscheibe 3 als auch der Bremssattel 1 relativ zur Fahrzeugachse fix bzw. nicht beweglich angeordnet sind, ist auf der der ersten Zuspanneinrichtung 13 gegenüberliegenden Seite der Bremsscheibe 3 die weitere Zuspanneinrichtung 15 vorgesehen.

Diese in Fig. 1 auf der linken Seite der Bremsscheibe 3 vorgesehene Zuspanneinrichtung 15 ist analog zur Zuspanneinrichtung 13 ausgebildet, d.h. sie weist wiederum einen Drehhebel 25 auf, der vorzugsweise exzentrisch an der Innenseite des Bremssattels 1 gelagert ist, und der dazu ausgelegt ist, (direkt über entsprechende Ansätze oder aber ggf. über weitere, hier nicht dargestellte, sich aber beispielhaft aus den weiteren Fig. ergebende Bauelemente) mittels wenigstens einer Nachstellhülse 27, in welcher ein Druckstück 29 verschraubbar angeordnet ist, den zweiten - hier den linken - Bremsbelag 5 in Richtung der Bremsscheibe 3 vorzuschieben. Der Drehhebel 25 weist eine zur Exzentrizität des Drehhebels 19 entgegengesetzte Exzentrizität auf.

Die beiden Drehhebel sind über eine Koppelmechanik, die hier als gelenkig an den oberen Enden der Drehhebel 19, 25 angelenkter, diese miteinander verbindender Bolzen 31 ausgebildet ist, direkt miteinander verbunden. Die beiden Drehhebel 19, 25 bewegen sich daher synchron zueinander.

Im Unterschied zum Stand der Technik nach Fig. 1c werden nach Fig. 1a somit beidseits der Bremsscheibe 3 jeweils separate Zuspanneinrichtungen 13, 15 vorgesehen, die über eine Koppelmechanik gemeinsam betätigbar sind.

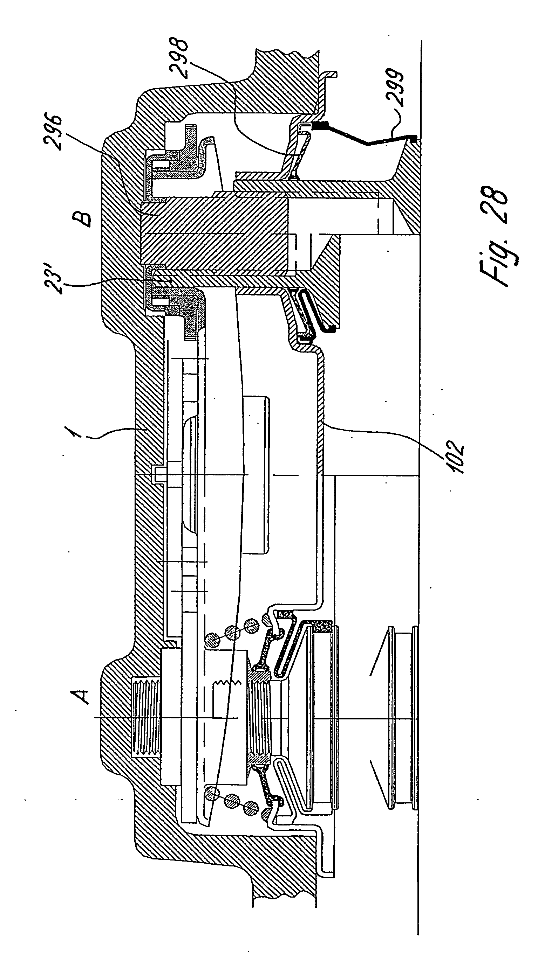

Analoges gilt für das Nachstellsystem der Scheibenbremse der Fig. 1a. Das Nachstellsystem dieser Bremse weist beidseits der Scheibenbremse angeordnete NachstellEinrichtungen auf. Diese umfassen die miteinander verschraubten und damit auch relativ zueinander axial verstellbaren Nachstellhülsen 21, 27 und Druckstücke 23, 29 sowie vorzugsweise separate Nachstellerantriebe (siehe die weiteren Fig.) beidseits der Bremsscheibe 3. Alternativ zu Nachstelldreheinrichtungen sind auch lageveränderbare Kolben oder andere lageveränderbare Einrichtungen realisierbar. Alternativ - siehe Fig. 28 - können die Druckstücke 23' und 29' mit einem hülsenartigen Ansatz 294 versehen werden, welcher auf einer mit Außengewinde versehenden Bolzen 296 kämmt, der am Drehhebel 19 oder am Bremssattel oder einem weiteren Element abgestützt ist. Die Druckstücke werden bevorzugt zweifach gegenüber der Montage- und Verschlußplatte 102 abgedichtet (Dichtungen 298, 299). Wesentlich ist, daß die Druckstück in Richtung zur Bremsscheibe beweglich ausgebildet sind.

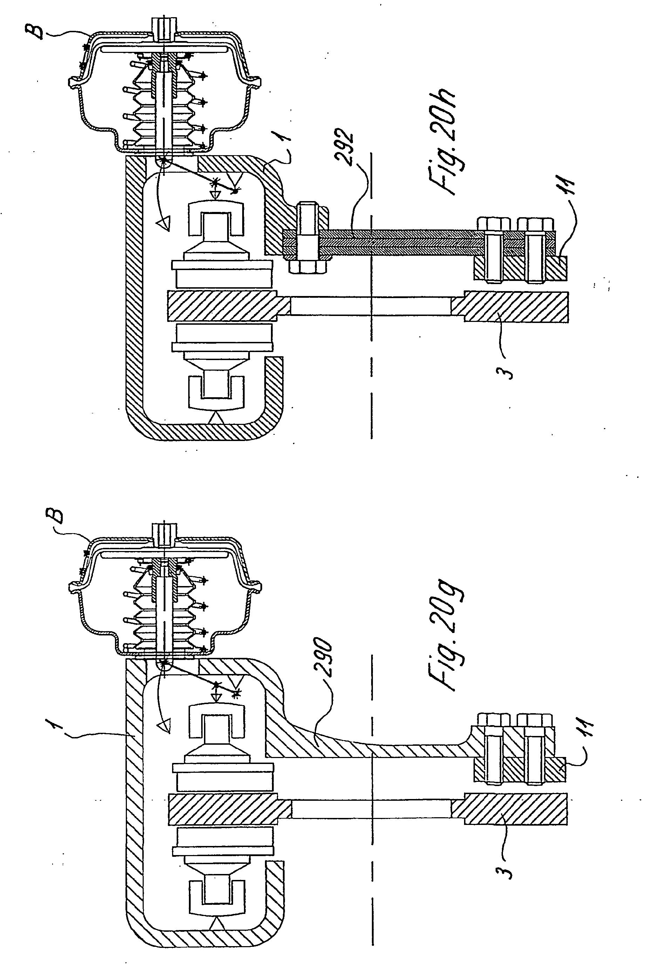

Die Ausführungsbeispiele der Fig. 1b, 1d und 1f unterscheiden sich von dem der Fig. 1 dadurch, daß der Bremssattel jeweils nur auf einer Seite der Bremsscheibe 1 eine Zuspanneinrichtung 13 aufweist, wobei die Erzeugung der Reaktionskraft auf der der Betätigungseinrichtung abgewandten Seite der Bremse durch Verschieben oder Verschwenken des Bremssattels 1 und/oder durch Verschieben der Bremsscheibe 3 erfolgt. Die Verschleißnachstellung auf der Reaktionsseite wird jedoch nicht wie nach dem Stand der Technik (Fig. 1c und Fig. 1e) durch Verschieben oder Verschwenken des Bremssattels oder Verschieben der Bremsscheibe realisiert sondern wie in Fig. 1a durch eine in den Bremssattel auf der Reaktionsseite integrierte Nachstell-Einrichtung. Nach Fig. 20g und h kann die Erzeugung der Reaktionskraft durch eine elastische Verformung von Bremssattels, Bremsscheibe oder eines separaten Elemente 292 erreicht werden.

Die derart ausgebildeten Scheibenbremsen bieten neben einer deutlichen Gewichts und Kostenminderung durch Entfall des Bremsträgers und des Schiebeführungssystems eines Schiebe-Bremssattels und einer Erhöhung der Robustheit durch den Entfall dieser Bauelemente den zusätzlichen Vorteil, daß durch die zwangsweise Verschleißnachstellung ein ungleichmäßiger Verschleiß von innerem und äußerem Bremsbelag besser beeinflußbar ist.

Ein weiterer wesentlicher Vorteil dieser Varianten liegt darin, daß der von Bremssattel 1 und/oder der Bremsscheibe 3 auszuführende Schiebe- oder Schwenkweg auf den zur Aufbringung der Reaktionskraft erforderlichen Krafthub begrenzt wird, der nur einen geringen Bruchteil des Verschleißhubes ausmacht; z.B. beträgt der notwendige Krafthub einer druckluftbetätigten Scheibenbremse für 22 Zoll-Räder ungefähr 4 mm, während der Verschleißhub ca. 25mm groß ist.

Das Ausführungsbeispiel der Fig. 1b weist wiederum wie das Ausführungsbeispiel der Fig. 1a beidseits der Scheibenbremse angeordnete Nachstell-Einrichtungen auf. Diese umfassen wiederum die miteinander verschraubten und damit auch relativ zueinander axial verstellbaren Nachstellhülsen 21, 27 und Druckstücke 23, 29 sowie vorzugsweise auch separate Nachstellerantriebe (siehe die weiteren Fig.) beidseits der Bremsscheibe 3.

Anders als in Fig. 1 weist die Scheibenbremse der Fig. 1b aber nur eine Zuspanneinrichtung auf einer Seite der Bremsscheibe 3 auf (hier auf deren rechten Seite), was die Kosten dieser Variante gegenüber der aus Fig. 1 deutlich verringert, da auf der gegenüberliegenden Seite der Bremsscheibe Bauelemente (u.a. der Drehhebel 25) einsparbar sind. Anstelle dessen ist es möglich, die Nachstellhülse 27 axial aber drehbar ortsfest an der Bremssattelinnenseite (Bremssattelrücken) anzuordnen und zum Nachstellen des Belagverschleisses auf dieser Seite der Bremsscheibe 3 das Druckstück 29 relativ zur axial fixen Nachstellhülse 27 zu verschrauben, so daß die axiale Position des Druckstückes 29 relativ zur Bremsscheibe 3 verändert wird.

Der Bremssattel 1 des Ausführungsbeispiels nach Fig. 1b ist wiederum wie der Bremssattel 1 des Ausführungsbeispiels nach Fig. 1a als Festsattel ausgebildet.

Eine weitere Besonderheit der Ausführungsform nach Fig. 1b liegt in der Verschiebbarkeit der Bremsscheibe 3 relativ zur Radachse. Dazu wird die Bremsscheibe vorzugsweise mit einer Verzahnung im Bereich ihrer Nabe versehen (hier nicht dargestellt), die derart ausgebildet ist, daß eine auf den Krafthub begrenzter Schiebeweg von z.B. < 2 mm realisierbar ist.

Zwar sind verschiebbare Bremsscheiben an sich bekannt. Ein wesentlicher Unterschied zu dem bekannten Schiebescheiben-Prinzip welches den Verschleißweg von Z.B. 25 mm als Verschiebeweg erfordert, besteht darin, daß sich die Bremsscheibe 3 der Bremse nach Fig. 1b ständig im Bereich ihres Arbeitshubes von < 2 mm befindet, so daß der Arbeitshub-Verschiebeweg zwischen Bremsscheibennabe und der eigentlichen Bremsscheibe 3 durch die ständige Bewegung bei Bremsbetätigung, Erschütterung etc. von Passungsrostbildung und Verschmutzung freigehalten wird. Die Bremsscheibe 3 bleibt damit im Bereich Ihres Arbeitshubes dauerhaft leicht verschiebbar.

Zudem kann der kleine Verschiebebereich relativ einfach mit Schutzmaßnahmen gegen Korrosionsbildung und Verschmutzung ausgestattet werden.

Eine übliche Schiebe-Bremsscheibe verändert dagegen mit zunehmendem Verschleiß allmählich ihre Arbeitsposition auf dem Schiebebereich von z.B. 25mm.Der nicht ständig genutzte Schiebebereich wird deshalb auf Dauer durch Korrosion und Verschmutzung schwergängig wodurch schwerwiegende Funktionsbeeinträchtigungen der Bremse eintreten können. Der relativ große Schiebebereich kann in nur mit großem Aufwand mit Schutzmaßnahmen versehen werden. Diese Probleme treten bei der Lösung nach Fig. 1b nicht auf.

Fig. 1c den zeigt Stand der Technik eines Schiebesattels, bei dem der Bremssattel 1 als Schiebesattel mit einem Sattellager ausgebildet ist, welches über den Weg des Krafthubes relativ zur Bremsscheibe bzw. zur Radachse 9 oder dem üblicherweise bei Schiebesattel-Scheibenbremsen vorgesehenen Bremsträger (hier nicht abgebildet) verschieblich ist, so daß die Zuspannung des der Zuspanneinrichtung 3 gegenüberliegenden Bremsbelages 5 auf der anderen Seite der Bremsscheibe 34 durch ein reaktionskraftbedingtes Verschieben des Bremssattels erfolgt, wobei nur auf einer Seite der Bremsscheibe, nämlich auf der Seite der Zuspanneinrichtung 13, eine Nachstellvorrichtung vorgesehen ist.

Hier geht das Ausführungsbeispiel der Fig. 1d einen anderen Weg. Der Aufbau der Bremsmechanik im Inneren des Bremssattels 1 entspricht dem des Ausführungsbeispiels nach Fig. 1b. Im Gegensatz zu Fig. 1b ist hier jedoch nicht die Bremsscheibe sondern der Bremssattel "mikroverschiebbar", d.h. im wesentlichen lediglich um den Betrag des halben Arbeitshubes (< 2 mm), nicht jedoch um den Betrag des Verschleiß-Nachstellweges. D.h., der Verschiebeweg des Sattellagers 33 ist nur so groß wie der maximale Arbeitshub und liegt typischerweise bei weniger als 5mm, z.B. bei 2 bis 4mm.

Um dies zu realisieren, weist die Scheibenbremse der Fig. 1d wiederum wie die Scheibenbremse der Fig. 1b separate Nachstell-Einrichtungen (hier: Elemente 21, 23 und 27, 29 abgebildet) auf beiden Seiten der Bremsscheibe 3 auf.

Selbstverständlich ist auch eine Kombination der Ausführungsformen nach Fig. 1b und 1d realisierbar, also eine Scheibenbremse mit Sattellager und verschieblicher Bremsscheibe, die jeweils um ca. den halben Arbeitshub verschiebbar sind. Auch diese Ausführungsform wird mit separaten Nachstell-Einrichtungen auf beiden Seiten der Bremsscheibe 3 versehen.

Fig. 1e zeigt eine sogenannte Schwenksattel-Scheibenbremse, bei welcher der Bremssattel am Bremsträger oder einem Achsteil um einen vorgegebenen Winkelbetrag verschwenkbar gelagert ist (Schwenklager 35 mit Strebenverbindung 37 zum eigentlichen Schwenk-Bremssattel 1).

Nach Fig. 1e ist dieser Verschwenkwinkel α derart groß gewählt, daß der gesamte Verschleißnachstellweg beim Verschwenken des Bremssattels überbrückbar ist.

Der prinzipielle Aufbau der Zuspannmechanik im inneren des Bremssattels entspricht bei dieser Variante wiederum der Zuspannmechanik der Fig. 1c.

Fig. 1f zeigt dagegen eine Scheibenbremse mit einem verschwenkbaren Bremssattel 1, der wiederum ein Schwenklager 39 aufweist. Der über die Strebenverbindung 37 am Schwenklager gelagerte "Schwenksattel" ist aber lediglich um einen Winkelbetrag α verschwenkbar, der so groß ist, daß die Bremsbeläge um den Weg des halben Arbeitshubes relativ zur Bremsscheibe 3 verschwenkbar sind. Auch diese Scheibenbremse weist wiederum nur einseitig der Bremsscheibe 3 eine Zuspanneinrichtung aber beidseitig der Bremsscheibe wenigstens eine Nachstelleinrichtung auf.

Selbstverständlich ist auch eine Kombination der Ausführungsformen nach Fig. 1 b und 1f realisierbar, also eine Scheibenbremse mit schwenkbarem Sattel und verschieblicher Bremsscheibe. Auch diese Ausführungsform wird mit separaten Nachstell-Einrichtungen auf beiden Seiten der Bremsscheibe 3 versehen. Der notwendige Schiebeweg im Krafthub kann in letzterem Fall auf Bremssattel 1 und Bremsscheibe 3 verteilt werden.

Anzumerken ist, daß sich die Erfindung für Scheibenbremsen, insbesondere Nutzfahrzeug-Scheibenbremsen, verschiedenster Art eignet. So ist die Idee von Nachstell-Einrichtungen beidseits der Bremsscheibe sowohl bei elektromotorisch zuspannbaren Bremsen als auch bei pneumatisch betätigten Bremsen realisierbar. Ferner können die Nachstell-Einrichtungen mit der/den Zuspanneinrichtungen ein- oder beidseitig der Bremsscheibe zum Antrieb gekoppelt werden und/oder unabhängig von den Zuspanneinrichtungen mit einem oder mehreren separaten elektromagnetischem Antrieb(en) versehen werden. Hier sind auch Mischformen denkbar, z.B. mit einer Nachstelleinrichtung mit Elektromotor auf der Reaktionsseite und mit einer mechanisch mit dem Drehhebel gekoppelten Nachstelleinrichtung auf der Seite der Zuspanneinrichtung.

Es ist ferner möglich, die Nachstell-Dreheinrichtungen beidseits der Bremsscheibe 1 mittels einer Rechner- und/oder Mikroprozessorsteuerung separat voneinander zu verstellen oder aber zum Erreichen eines gemeinsamen Verstellens eine mechanische Kopplung der Nachstelleinrichtungen beidseits der Bremsscheibe 3 vorzunehmen.

Die Zwangsrückstellung des jeweils schiebe - bzw. schwenkbaren Elementes Bremssattel oder Bremsscheibe ist durch elastische Rückstellelemente ( z.B. Rückstellfeder(n) oder aktives Rückstellen durch das reaktionsseitige Nachstellermodul möglich.

Die Erfindung eignet sich ferner sowohl für Bremsen mit nur einem einzigen Nachstell-Antrieb auf jeder Seite der Bremsscheibe als auch für Ausführungsformen mit zwei oder sogar mehr Nachstell-Antrieben auf jeder Seite der Nachstellvorrichtung.

Eine weitere Variante zeigen die Fig. 20g und h. Danach ist der Bremssattel 1 um den Betrag des halben oder ganzen Krafthubes elastisch verformbar. Nach Fig. 20g weist er einen elastischen unteren Bereich 290 zur Befestigung am Achsflansch 11 auf und nach Fig. 20h ist er über ein separates elastisches Element 292 (z.B. Blattfederelement), welches zwischen den Achsflansch und den Bremssattel 1 geschraubt ist, mit dem Achsflansch 11 verbunden. Ein Sattellager ist nicht mehr erforderlich. Diese Varianten sind ggf. auch mit einer elastisch verformbaren Bremsscheibe (hier nicht dargestellt) oder auch mit einer verschiebbaren Bremsscheibe kombinierbar, wobei dann der durch Elastizität zu überbrückende Weg des Bremssattels und der Bremsscheibe besonders gering bemessen werden können.

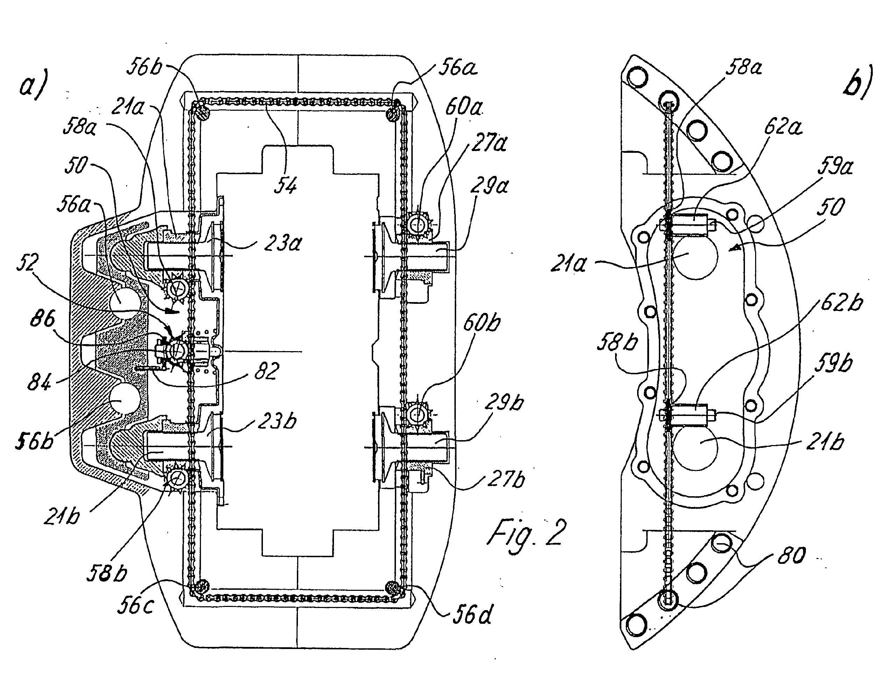

Vorteilhafte Ausbildungen der Nachstell-Einrichtungen bzw. der gesamten Nachstellmechanik mit den Nachstell-Einrichtungen und den Nachstellerantrieben zeigen die Fig. 2, 3 und 4.

Nach Fig. 2 ist jeweils einseitig der Bremsscheibe 3 ein Nachstellermodul 50 angeordnet, welches eine Abtriebswelle mit Abtriebszahnrad 52 und Freilauf-und/oder Überlastkupplungseinrichtung 53 aufweist.

Mit dem Abtriebszahnrad kämmt eine Synchronisationskette 54 zur Synchronisation sowohl der Nachstellbewegungen aller Nachstell-Einrichtungen, wobei im vorliegenden Fall jeweils zwei Nachstell-Dreheinrichtungen auf jeder Seite der Bremsscheibe 3 angeordnet sind. Die Scheibenbremse der Fig. 2 weist somit insgesamt vier Nachstell-Dreheinrichtungen (Nachstellhülsen 21 a, b, 27a,b; Druckstücke 23a,b; 29a,b) auf.

Die Synchronisationskette 54 liegt in einer Ebene senkrecht zur Bremsscheibe 3 im oberen Innenbereich des Bremssattels 3 und wird am Bremssattel 1 an vier Bolzen 56 vierfach um ca. 90° umgelenkt und wird derart im wesentlichen auf einer Rechteckkontur im Bremssattel 1 geführt, wobei die Synchronisationskette die Bremsscheibe 3 in ihrem oberen Umfangsbereich umfaßt.

Das Abtriebszahnrad 52 treibt die Kette 54 auf der Seite der Zuspanneinrichtung 13 bzw. auf der Seite der Einleitung der Bremskraft in die Scheibenbremse über den über (teil-)kugelschalenartige Lager (weiter unter detaillierter beschrieben) und zwei Lagerkugeln 56a,b am Bremssattelrücken des am (in diesem Bereich geschlossenen ausgebildeten) Bremssattel 1 gelagerten Drehhebels 19, der weiter unten anhand der weiteren Fig. noch näher erläutert wird.

Die Synchronisationskette 54 kämmt ferner mit vier Zahnrädern 58a,b, 60a,b, welche jeweils auf Wellen 59a,b sitzen, die nach unten hin Zylinderschnecken 62a,b (siehe Fig. 2b) aufweisen, welche mit einer Außenverzahnung der mit Innengewinde versehenen und auf die mit Außengewinde versehenen Druckstücke 23 a,b aufgeschraubten Nachstellhülsen 21a, b kämmen.

Durch die "um" die Bremsscheibe 3 geführte Synchronisationseinrichtung in Form eine Synchronisationskette 54 ist es also möglich, mit nur einem "Nachstellerantrieb" alle vier Nachstell-Dreheinrichtungen auf den beiden Seiten der Bremsscheibe sowohl anzutreiben als auch zu synchronisieren.

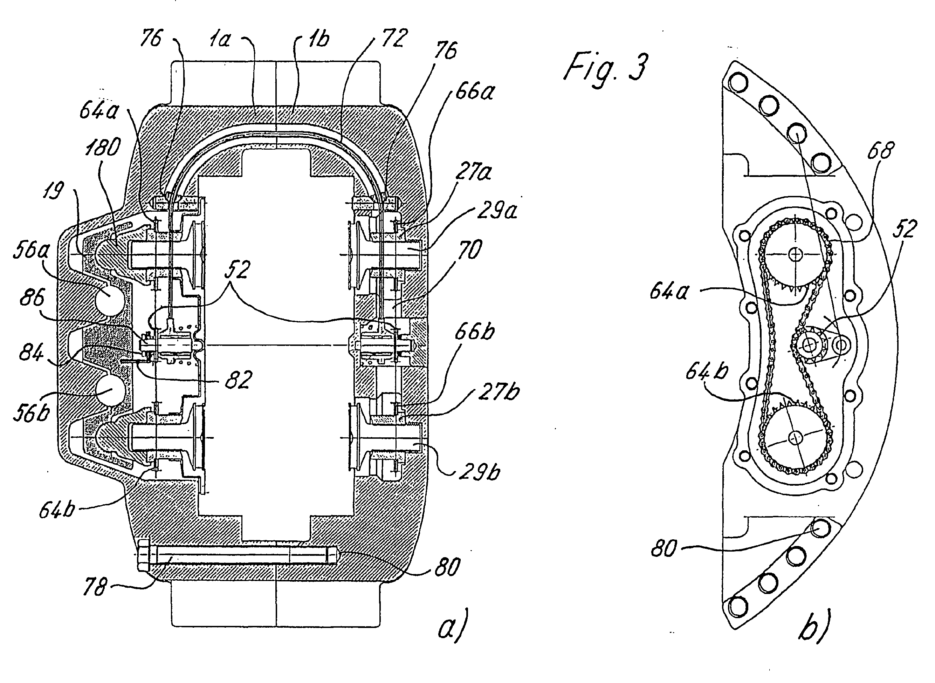

Eine weitere Ausführungsform der Erfindung zeigt Fig. 3. Bei dieser Ausführungsform werden die Drehungen der beiden Nachstellhülsen 21 a, b bzw. 27a, b auf jeder Seite der Bremsscheibe 3 jeweils durch um auf die Nachstellhülsen aufgesetzte Zahnräder 64a, b bzw. 66a,b geschlungene Synchronisationsketten 68, 70 synchronisiert.

Eine Synchronisation von zwei Drehantrieben auf einer Seite der Bremsscheibe ist aus der DE 42 12 405 A1 bekannt. Im vorliegenden Fall kämmen die Synchronisationsketten 68, 70 auf jeder Seite der Bremsscheibe jedoch ferner jeweils mit einem mittig zwischen den beiden Drehspindeln angeordneten Abtriebszahnrad 52, dem eine jeweils eine automatische Freilauf- und/oder Überlastkupplungseinrichtung 53 zugeordnet ist.

Nach Fig. 3 erfolgt die Synchronisation der Nachstell-Drehantrieb auf jeder Seite der Bremsscheibe 3 also durch separate, auf der jeweiligen Bremsscheibenseite angeordnete Synchronisationsketten 68, 70 (oder entsprechend ausgelegte - hier nicht dargestellte - Synchronisationsriemen). Ein Bowdenzug 72 nach Art einer biegsamen Welle mit Stirnrad- oder Kreuzgetriebe, der im Bogen in einer Art "Kabelkanal" 74 im Bremssattel 1 um eine Seite des Umfangsrandes der Bremsscheibe 3 geführt ist, überträgt die Antriebskraft von der Freilauf- und/oder Überlastkupplungseinrichtung 53 auf der Seite der Krafteinleitung in die Scheibenbremse (hier links) auf die Reaktionsseite. An den beiden Enden des Kabelkanales 74 sind mit über den Bowdenzug gezogenen Dichtungsstopfen 76 verschlossen.

Die Ausführungsform der Fig. 3 hat den Vorteil, daß nicht eine einzige Kette nach Art der Synchronisationskette 54 übermäßig belastet wird, sondern daß sich bei relativ geringem konstruktiven Aufwand die Belastungen auf die zwei Ketten 68, 70 auf jeder Seite der Bremsscheibe 3 und den Bowdenzug 72 verteilen lassen.

Der eigentliche Nachstellantrieb sowohl nach Fig. 2 als auch nach Fig. 3 erfolgt durch einen am Drehhebel 19 angeordneten Mitnehmer 82, welcher auf eine Schaltgabel 84 wirkt, die auf dem Ende der Welle 86 sitzt, auf welcher auch das Zahnrad 52 sitzt, so daß beim Zuspannen der Scheibenbremse und bei der damit verbundenen Bewegung des Drehhebels 19 ein Drehen des Zahnrades 52 bewirkt wird, wobei die Synchronisationsketten 68, 70 und der Bowdenzug 72 diese Drehung auf alle vier Nachstell-Drehantriebe übertragen.

Gut zu erkennen ist in Fig. 3 noch, daß der Bremssattel 1 ungefähr in der Ebene der Bremsscheibe geteilt ausgebildet ist, wobei die beiden Bremssattelteile 1a und 1b mittels Schraubbolzen 78 miteinander verschraubt sind, die von einer Seite her durch das eine Bremssattel 1 durchgeführt sind und in am Außenumfang verteilte Bohrungen 80 des weiteren Bremssattelteiles 1b einfassen, die ein Innengewinde aufweist. Die Zuspanneinrichtung ist im Bremssattel 1 zusammensetzbar oder als vormontiertes Zuspannmodul montierbar (z.B. nach Art DE 195 15 063 C1). Gut zu erkennen ist in Fig. 3 auch noch, daß der Fest-Bremssattel 1 relativ leicht baut, d.h. er läßt sich auf ein konstruktives Minimum beschränken. Bevorzugt wird der Bremssattel einteilig und vorzugsweise verschraubungsfrei ausgebildet, wobei vorzugsweise das Einsetzen der Elemente des Zuspannsystemes und der Nachstelleinrichtungen von der Seite der Bremsscheibe her erfolgt.

Die Gesamtübersetzung der Synchronisationsmechaniken in Fig. 2 und 3 wird vorzugsweise so gewählt, daß die Zustellbewegung auf Zuspannseite und Reaktionsseite gleichmäßig erfolgt. Zum Ausgleich eines systematisch auftretenden Verschleißunterschiedes kann jedoch auch eine Über- oder Untersetzung in der Übertragung der Nachstellbewegung zwischen Zuspann- - und Reaktionsseite ausgebildet werden.

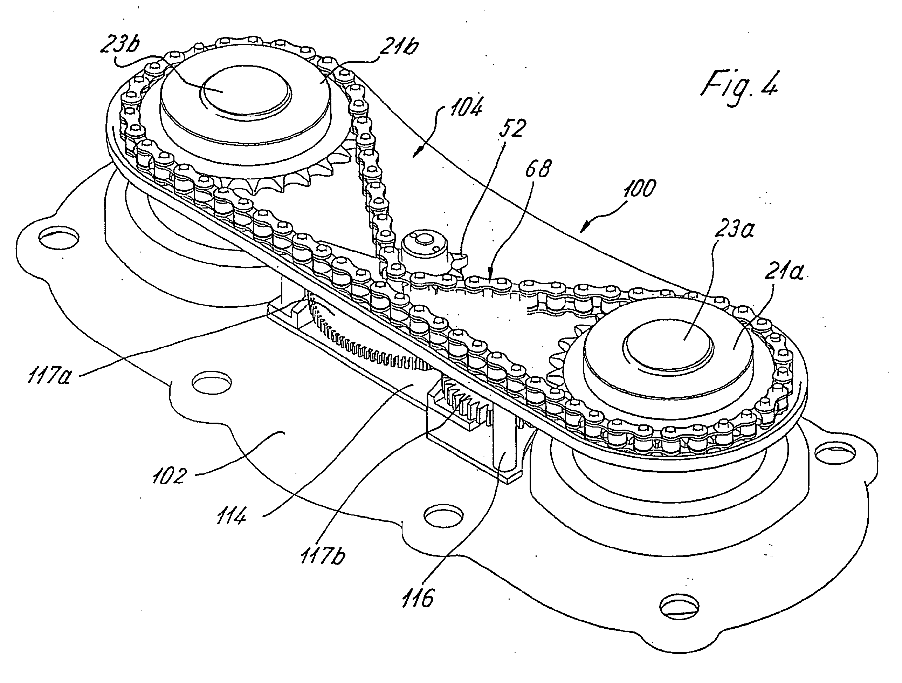

Eine weitere Besonderheit der erfindungsgemäßen Scheibenbremsen in Hinsicht auf deren Nachstell- und Synchronisationsmechanik ergibt sich aus den weiteren Fig. 4, 5 und 6. Diese Figuren zeigen jeweils ein "Nachstellermodul", welches nach Art einer vormontierten Einheit herstellbar und in einen entsprechenden Freiraum der Scheibenbremse, insbesondere im Bereich der Zuspanneinrichtung einsetzbar sind.

Das vormontierbare Nachstellermodul 100 weist in einer seiner Draufsichten eine langgezogene, im wesentlichen rechteckige Form mit aber bedarfsgerecht abgerundeten und ausgeformten Kanten auf. Es umfaßt zwei voneinander beabstandet angeordneten, zueinander parallel und einander im wesentlichen überdeckende Montageplatten 102, 104 auf, zwischen denen ein Freiraum besteht, in welchem vorzugsweise ein Elektromotor 106 als Nachstellerantrieb und ein Getriebe 108 zum Umsetzen der Drehbewegungen der Antriebswelle des Elektromotors in eine passende Drehzahl zum Antrieb der Nachstell-Dreheinrichtungen (Spindeln) untergebracht sind.

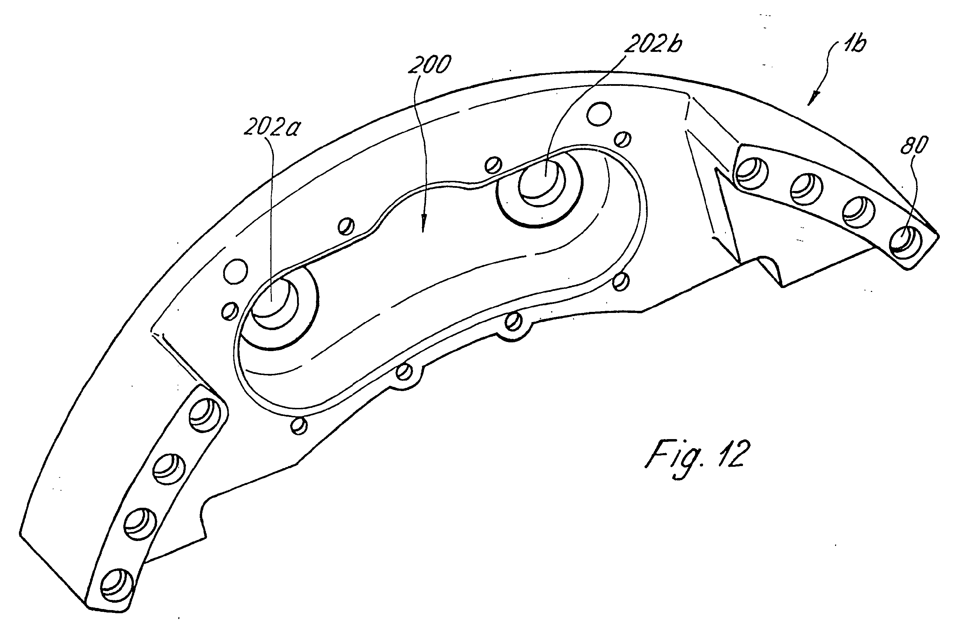

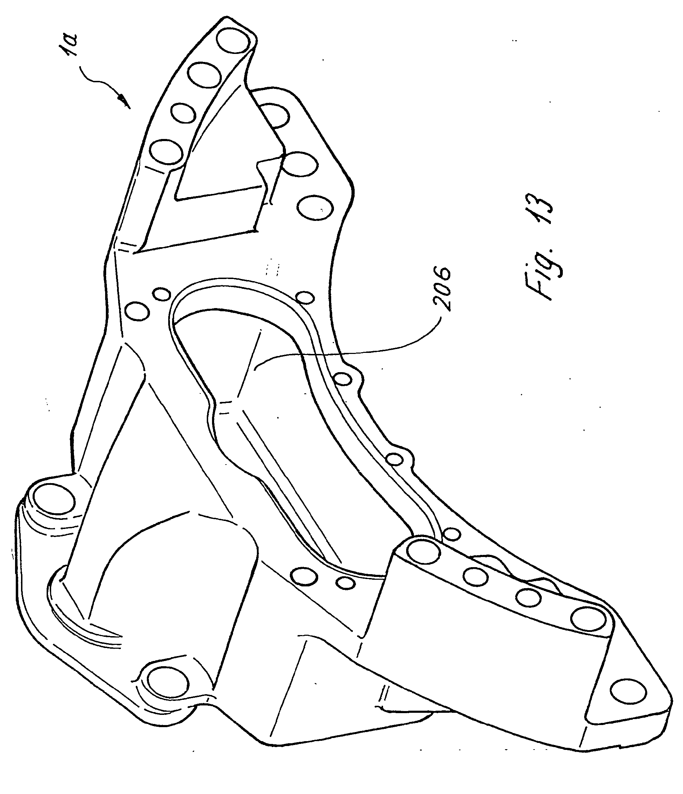

Die Montageplatte 102 weist etwas größere Abmessungen als die weitere Montageplatte 104 auf und ist im äußeren Umfangsbereich mit Bohrungen 110 für Schraubbolzen (hier nicht dargestellt) zur Befestigung am Sattel versehen. Die Montageplatte 102 dient auch als Verschlußplatte für Sattelöffnungen (siehe Fig. 12 und 13). Die Montageplatte 104 dient dagegen in erster Linie zur Montage von Motor 106 und Getriebe 108.

Auf der weiteren Montageplatte 104 ist - z.B. an dessen Außenseite - vorzugsweise die Synchronisationskette 68 befestigbar, welche um die Zahnräder 64a, b gelegt ist und die Drehungen der Nachstellhülsen 21a, b und damit die der beiden Nachstell-Dreheinrichtungen synchronisiert.

Die Nachstellhülsen 21a, 21b durchgreifen jeweils Ausnehmungen/Vertiefungen/Führungen (hier nicht zu erkennen) der Montageplatten 102, 104.

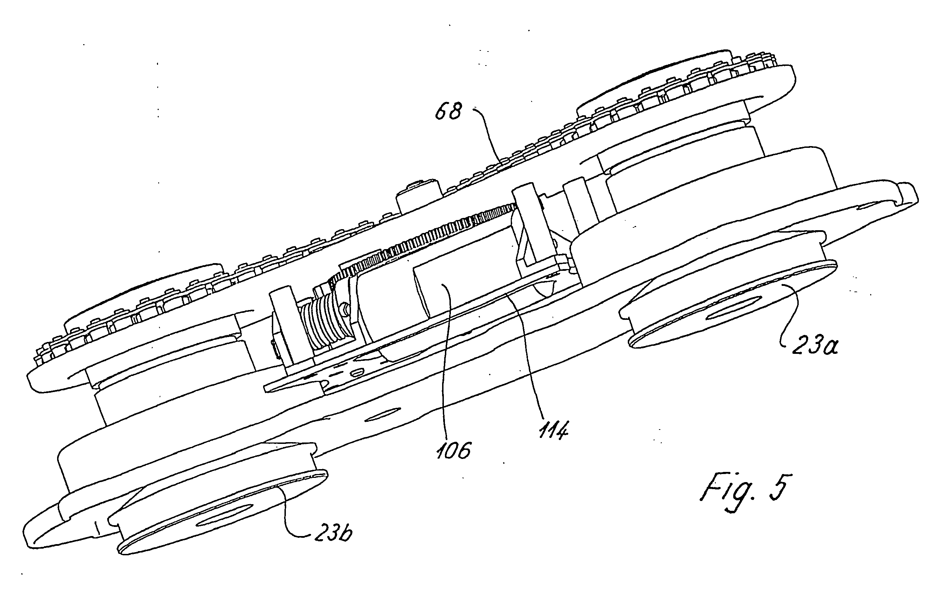

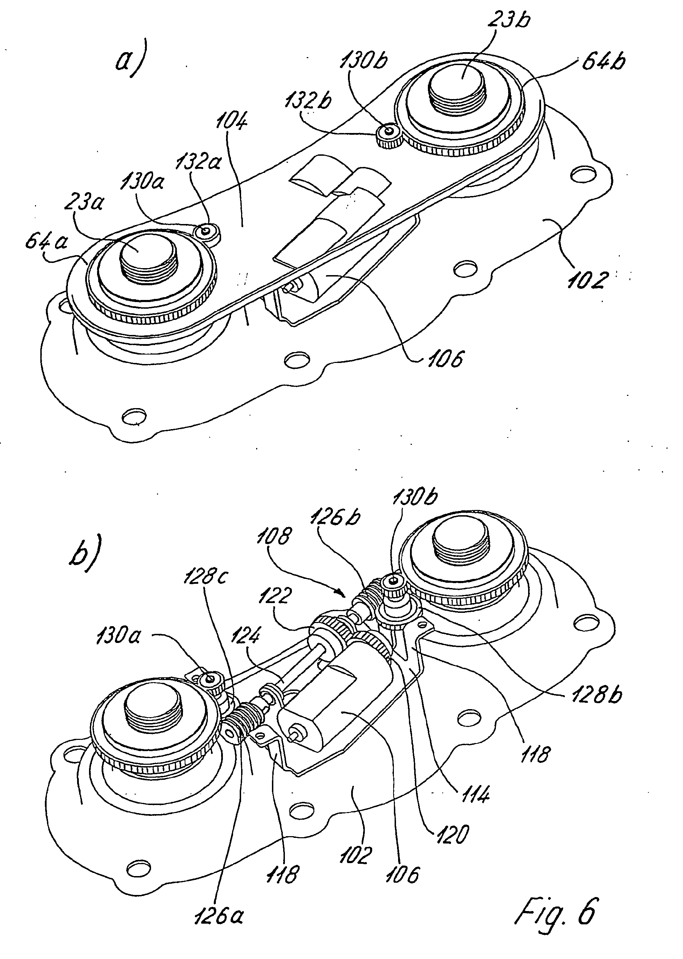

Der Elektromotor 106 sitzt sowohl nach Fig. 4 und 5 als auch nach Fig. 6 auf einer Art Montageblech 114, welches an der einen Montageplatte 104 befestigt ist und auf/an dem Distanzstücke 116 und/oder Abwinklungen vorgesehen sind, mit welchen die beiden Montageplatten parallel zueinander beabstandet fixiert werden. Beim Einsatz eines Elektromotors 106 kann auf den Einsatz von mechanischen Freiläufen und den Einsatz von Überlastkupplungen bei entsprechender Steuerungs- und/oder Regelungselektronik ggf. auch verzichtet werden.

Nach Fig. 5 übernehmen Zahnräder 117a, b, welche zwischen den Montageplatten 102, 104 angeordnet sind, die Übersetzung der Drehungen des Elektromotors 106 auf das Zahnrad 52.

Der auf dem Montageblech 114 fixierte Motor liegt im wesentlichen leicht winklig zu der die Achsen der beiden Nachstellhülsen verbindenden Geraden. Sein Abtriebszahnrad 120 kämmt nach Fig. 6 mit einem Zahnrad 122, welches auf einer parallel zum Motor 106 ausgerichteten Welle 124 sitzt, welche in Ausnehmungen von zwei der Abwinklungen 116 des Montagebleches 114 gelagert ist. An den Enden der Welle 124 sind jeweils Zylinderschnecken 126a, b aufgebracht, die mit Zahnrädern 128a, 128b kämmen, welche über Wellen 130a, 130b, welche die weitere Montageplatte 104 durchsetzen, und an deren Enden Zahnräder 132a, 132b angeordnet sind, die mit den Zahnrädern 64a 64b auf den Nachstellhülsen 21a, 21b kämmen. Die Zylinderschnecken sind so ausgebildet (Rechts- bzw. Links-Ausführung), daß keine unterschiedlichen Gewinderichtungen (Rechts/Linksgewinde) für die Druckstücke notwendig sind. In die Nachstellhülsen 21 sind jeweils bereits die Druckstücke 23a, 23b mit deren Gewindeeinsätzen vormontierbar einschraubbar.

In dem nur aus wenigen Teilen kostengünstig herstellbaren und leicht montierbaren Nachstellermodul 100 sind somit auf einfache Weise sowohl jeweils ein Nachstellerantrieb als auch die Nachstell-Dreheinrichtungen auf jeder Seite der Bremsscheibe als auch deren Synchronisationsmechanik platzsparend integrierbar.

Eines der Nachstellermodule 100 kann auf jeder Seite der Bremsscheibe 3 vorgesehen werden, wobei die Synchronisation der Nachstellbewegungen mechanisch als auch elektronisch/rechnerisch steuernd und/oder regelnd erfolgen kann. Es ist lediglich notwendig, der Scheibenbremse ein Stromversorgungskabel und/oder ein Datenübertragungskabel zuzuführen und diese in der Scheibenbremse zum Nachstellermodul 100 zu führen.

Bei Verwendung eines elektrischen Nachstellerantriebes mit Elektromotor 106 ist es also grundsätzlich möglich, nur einen Elektromotor 106 zu verwenden und die Übertragung der Nachstellbewegung von der Zuspann- auf die Reaktionsseite mechanisch z.B. nach Art der Fig. 2 oder 3 auszuführen. Vorteilhaft wird jedoch auf der Reaktionsseite ein eigenständiger elektrischer Nachstellantrieb angeordnet.

Die elektrische Verschaltung der Reaktionsseite mit der Zuspannseite ist wegen der Koppelungs- und Abdichtproblematik einfacher ausführbar als die mechanische Getriebesynchronisation und es ergeben sich durch die Möglichkeit der unabhängigen Steuerung der beiden Nachstellsysteme zusätzliche Möglichkeiten des Steuerns/Regelns des Betriebsverhaltens der Bremse.

So ermöglicht eine individuelle Ansteuerung der Nachstell-Drehantriebe der beiden Nachstellermodule 100 auf beiden Seiten der Bremsscheibe 3:
- ein individuelles Einstellen des Lüftspieles an beiden Seiten der Bremsscheibe 3 auf die sich jeweils einstellende Position derselben. Z.B. kann bei Verwendung einer eingespannten Bremsscheibe die Einbauposition derselben bedingt durch Bauteiltoleranzen um ~/- 1 mm streuen;
- es wird ein aktives Zurückstellen der verschiebbaren Bremsscheibe oder des Schiebe- bzw. Schwenksattels in eine Soll-Ausgangsposition nach jeder Bremsung ermöglicht;
- bei Entstehen eines ungleichen Bremsbelagverschleißes kann das Lüftspiel auf den beiden Seiten der Bremsscheibe ungleich eingestellt werden, um einen Ungleichverschleiß bei nachfolgenden Bremsungen zu kompensieren,
- bei einem Geländeeinsatz des Fahrzeuges können die Bremsbacken /Bremsbeläge leicht schleifend ausgelegt werden, um die Reibflächen von abrasivem Schmutz freizuhalten;
- es ist eine Minimierung des erforderlichen Lüftspiels und damit der Betätigungsenergiebedarfes möglich.

Gerade aus den vorstehenden Vorteilen wird deutlich, daß es sich anbietet, die vorteilhaften Wirkungen der Ideen der Bremsen der Fig. 1 und/oder der Synchronisationsmechaniken nach Fig. 2 und 3 und/oder der Nachstellermodule nach Fig. 4 bis 6 zu einer grundsätzlich neuen Scheibenbremsenart zu kombinieren.

Dies soll nachfolgend anhand von weiteren Ausführungsbeispielen näher erläutert werden.

Es ist bekannt (z.B. EP 0 531 321) den Drehhebel 19 mit einem Exzenter bzw. Exzenterabschnitt zu versehen, welcher direkt oder über weitere Elemente auf eine Traverse wirkt, in welcher die Druckstücke verschraubt sind.

Es ist auch bekannt, den Drehhebel mit seitlichen Ansätzen zu versehen, welche auf die Enden der Druckstücke oder aufNachstellhülsen wirken, in welchen die Druckstücke verschraubt sind (DE 36 10 569 A1).

Beiden Konzepten gemeinsam ist die Bauart des Drehhebels, der einen etwa halbkreisförmigen Ansatz trägt, der am äußeren Durchmesser die Laufbahn für ein Rollenlager bildet, wobei im Inneren des jeweiligen halbkreisförmigen Ansatzes der Exzenter mittels einer Gleitlagerhalbschale sowie einer darin aufgenommenen Lagerwalze gebildet wird.

Diese Lagerungsanordnung ermöglicht es - insbesondere bei der zweiten beschriebenen Bauart, die Reaktionskräfte des Exzenterlagers und des äußeren Rollenlagers in ihrer Position auf der Längsachse des Hebels deckungsgleich zu halten.

Hierdurch wird erreicht, daß Biegebeanspruchungen auf den Hebel sowie auch Verformungen desselben sowie ein hieraus resultierender Kantenlauf von Rollenlager und Gleitlager vermieden werden, was die Lebensdauer der Lager deutlich senken kann.

Bei der Bauart mit einer Traverse wird zwar die Deformation des Hebels durch die Traverse gemindert, jedoch ist auch hier eine Erhöhung der Lebensdauer insbesondere durch Vermeidung von Kantenlauf wünschenswert.

Wünschenswert ist ferner ein Ersatz des Rollenlager auf der Seite der größeren Durchmesser des Exzenteransatzes des Drehhebels. Die Notwendigkeit, die äußere Lagerschale als halbzylindrischen Ansatz umhüllend um den Exzenter anzuordnen, führt zwangsläufig zu relativ großen Lagerdurchmessern des äußeren Lagers. Hieraus ergibt sich die Notwendigkeit dazu, auf dem äußeren Lager ein Wälzlager einzusetzen, da bei Verwendung eines Gleitlagers die höheren Reibwiderstände in Verbindung mit den großen Reibdurchmessern zu Reibungs- und Zuspannkraftverlusten und in der Folge zu einer unerwünscht hohen Bremsenhysterese führen können.

Die Zuspanneinrichtung der hebelbetätigten Scheibenbremse soll daher weiter dahingehend optimiert werden, daß eine weitgehende Verwendung von Gleitlagern mit kleinen Reibdurchmessern bei gleichzeitiger Minimierung der Verformungen des Drehhebels erreicht wird.

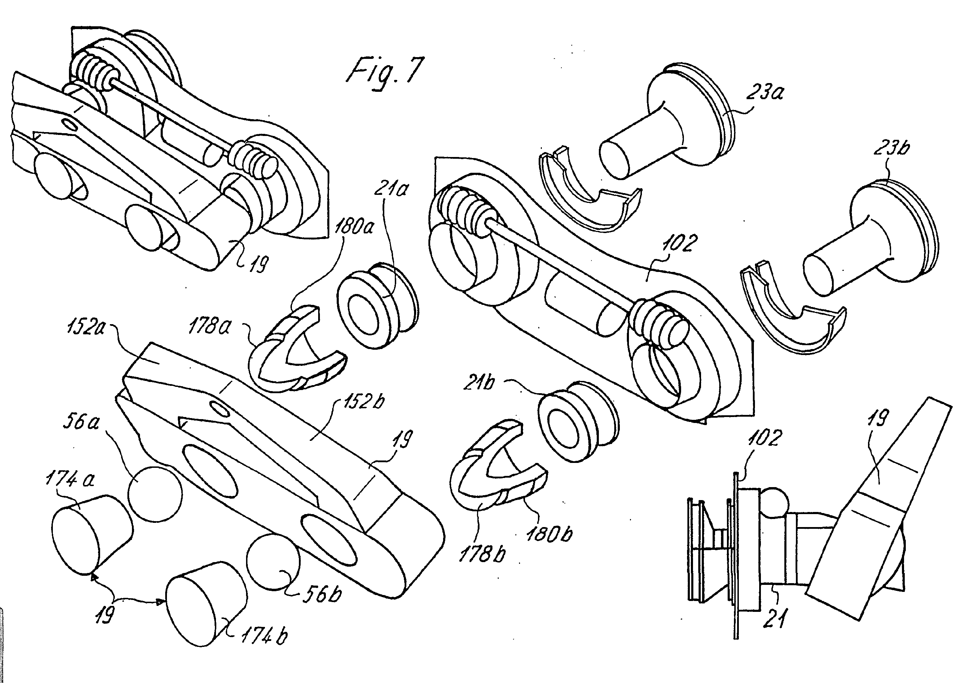

Fig. 7 verdeutlicht die neuartige Ausbildung und Lagerung des Drehhebels 19.

Der Drehhebel 19 ist als traversenartiges Baulement ausgebildet, welches den Einsatz einer zum Drehhebels 19 separaten Traverse unnötig macht.

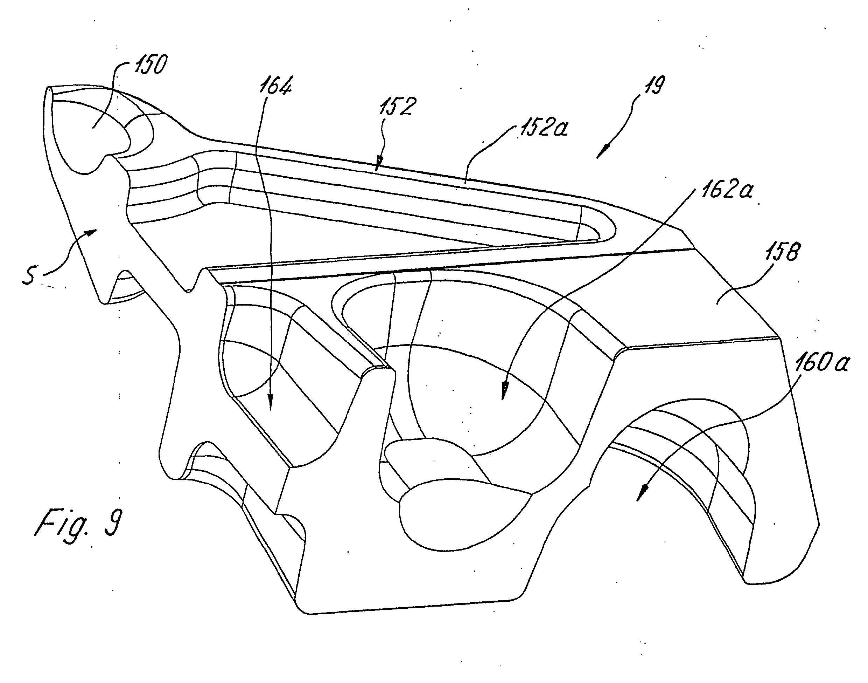

Der Drehhebel 19 ist besonders gut in Fig. 9 zu erkennen, welche sich auf eine Darstellung des Abschnittes rechts der Symmetrieebene ,;S" des einteiligen Drehhebels 19 und oberhalb einer weiteren "Symmetriebene", hier aber allein bezogen auf den unteren Teil des Drehhebels, beschränkt.

Der Drehhebel 19 weist eine "obere" Ausnehmung 150 (halkugelkalottenartig) zur Aufnahme des Endes einer Kolbenstange einer Betätigungseinrichtung (z.B. Bremszylinder, elektrisch und/oder mechanisch und/oder pneumatisch betätigbar) auf (siehe z.B. auch die EP 0 531 321). Vom Bereich der oberen Ausnehmung 150 aus verbreitert sich der Hebel im Bereich eines "dreieckförmigen" Abschnittes 152 nach unten hin, bis er eine über den Abstand der beiden Nachstellhülsen 21a, b und die Druckstücke 23a, 23b hinausgehende Breite erreicht. Er verbreitert sich ferner auch in Richtung (in Einbaustellung gesehen) senkrecht zu Bremsscheibe.

Im Bereich des dreickförmigen Abschnittes 152 sind an den beiden Hauptaußenflächen des Drehhebels 19 Ausnehmungen 154, 156 vorgesehen, welche das Gewicht des Drehhebels 19 minimieren, wobei die strebenartigen Ränder 152a des dreieckförmigen Abschnittes 152 des Drehhebels diesem in diesem Bereich eine erhöhte Festigkeit gegen Biegebelastungen sichern.

An den dreieckförmigen, in üblicher Darstellung der Fig. 7 und 9 "oben liegenden" Abschnitt 152 des Drehhebels schließt sich in dessen unterem, von der Ausnehmung 150 abgewandten Bereich ein im wesentlichen in der Draufsicht rechteckiger, traversenartiger Abschnitt 158 von im wesentlichen konstanter Breite an, der aber gegenüber dem dreickförmigen Abschnitt eine sich im wesentlichen stufennartig deutlich vergö-ßernde Bautiefe aufweist (in der Einbaustellung senkrecht zur Bremsscheibenebene betrachtet).

Im rechteckigen Abschnitt des Drehhebels sind im wesentlichen sechs weitere Ausnehmungen 160a,b, 162a,b und 164, 165 ausgebildet, wobei die beiden äußeren Ausnehmungen 160a,b auf der der Ausnehmung 150 für die Aufnahme der Kolbenstange gegenüberliegenden Seite des Drehhebels 19, die sich hieran nach innen hin anschlie-ßenden weiteren Ausnehmungen 162a,b auf der Seite der Ausnehmung 150 und die mittleren Ausnehmungen 164, 165 auf beiden Seiten des Drehhebels 19 ausgebildet sind.

Die vier Ausnehmungen 160 und 162 sind jeweils rechteckig mit abgerundeten Enden ausgebildet und verjüngen sich, wobei sie in ihrem Endbereich im wesentlichen kalottenförmige/halbkugelschalenartige Form (Exzenterkalotten und Hebelkalotten) aufweisen, während die mittleren Ausnehmungen 164, 165 eine schmalere, längliche Formgebung aufweisen.

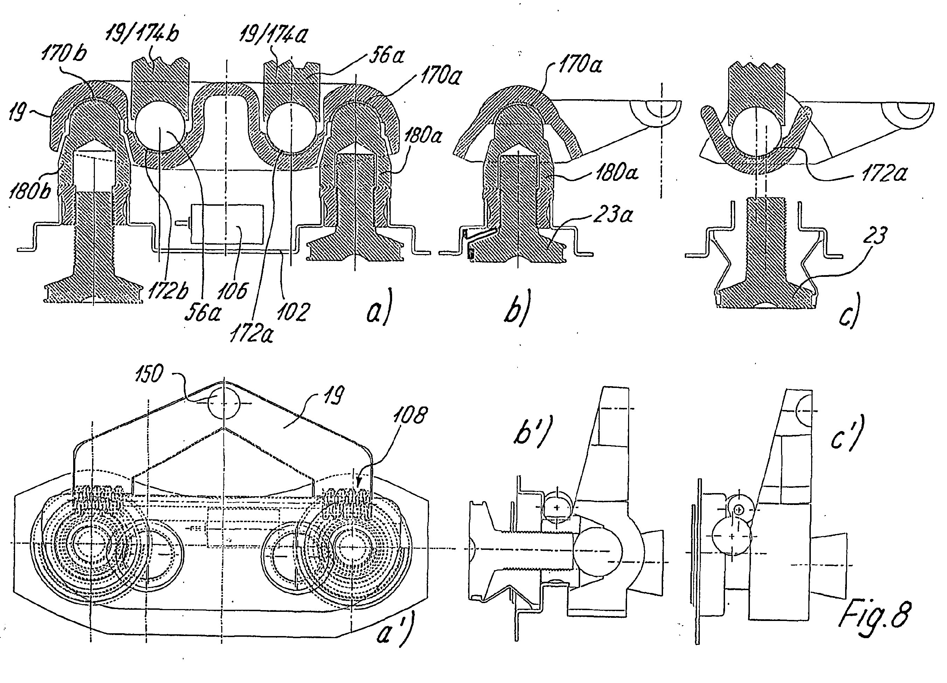

Die vier Ausnehmungen 160 und 162 dienen zur Aufnahme von ebenfalls im, wesentlichen halb-/teilkugelschalenartigen, kalottenförmigen Gleitlagerschalen 170a,b 172a,b (siehe Fig. 8).

Auch in die Ausnehmung 150 kann ein derartiges teil-/halbkugelschalenartiges, kalottenförmiges Gleitlager eingesetzt werden. In die innen liegenden Gleitlagerschalen 172a,b sind die Lagerkugeln 56a, 56b eingesetzt.

Diese können direkt am Bremssattelrücken bzw. an Ansätzen des Bremssattelrücken oder an separaten Bauteilen 174a, b abgestützt werden, welche fest mit dem Bremssattel(rücken) 19 verbunden werden.

Hierzu sind der Bremssattel oder die weiteren Bauteile mit entsprechenden kalottenförmigen Ausnehmungen 176a, b zu versehen, in welche die Lagerkugeln 56 eingreifen. Die Lagerkugeln 56 sind in den Ausnehmungen 176 fixierbar.

In die äußeren Ausnehmungen 160a,b bzw. in die in diese eingesetzten Gleitlagerschalen 170a,b 172a,b greifen Lagerkugeln oder kugelartig geformte Enden 178a, b von Zwischenstücken 180a, b ein. Die Zwischenstücke 180 sind an ihren den kugelartig geformten gegenüberliegenden Enden hülsenartig ausgebildet und nehmen die bremsscheibenabgewandten Enden der Druckstücke 23a, b auf, wenn die Beläge noch nicht verschlissen sind (siehe Fig. 8a).

An die Zwischenstücke 180 schließen sich axial an deren vom Drehhebel 19 abgewandten Enden die Nachstellhülsen 21a, b mit Innengewinde an, welche in die Montageplatte 102 und/oder 104 einsetzbar sind. In die Nachstellhülsen 21 sind die schraubbolzenartigen Enden der sich kurz vor den Bremsscheiben 3 aufweitenden Druckstücke 23 eingeschraubt. Durch Drehen der Nachstellhülsen 21 ist somit die axiale Beabstandung zwischen den Druckstücke, 23 und dem Drehhebel 19 zur Nachstellung von Brembelagverschleiß veränderbar, wobei rein schematisch die Möglichkeit des Drehens durch das Schneckenradgetriebe 108 angedeutet wird, welche auf die Außenverzahnung oder ein Zahnrad auf den Nachstellhülsen 21 wirkt.

Die Zwischenstücke 180 dienen somit der Kraftübertragung vom Drehhebel 19 auf die Druckstücke 23 beim Zuspannen der Bremse.

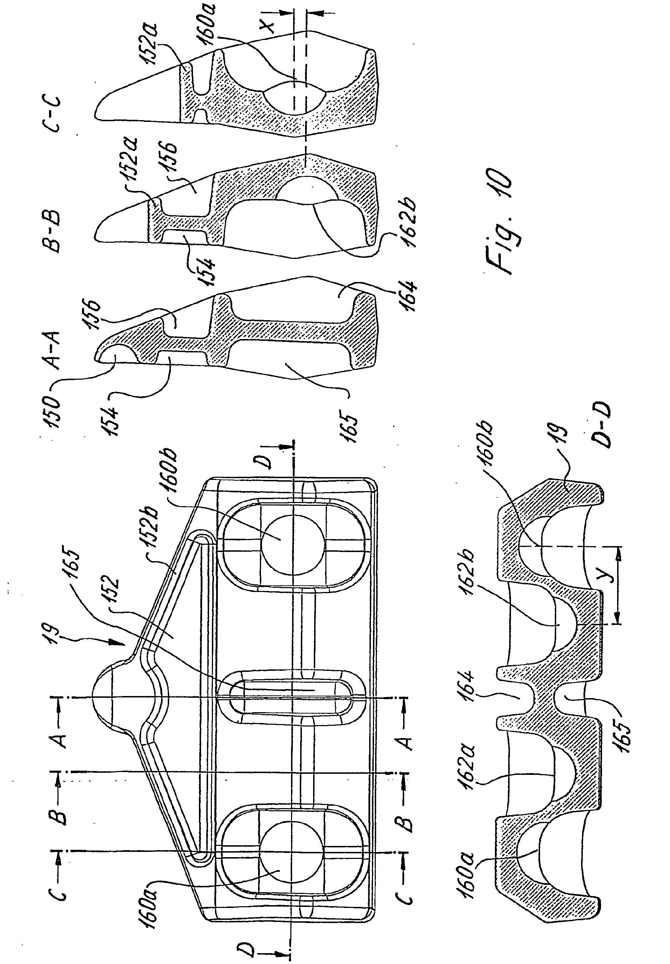

Nach Fig. 7 und 8 wird an dem traversenartig ausgebildeten Brems- bzw. Drehhebel 19 beidseitig des mittleren (Linie A-A in Fig. 10) somit je ein Lagerpaar, bestehend aus je einem Hebellager und einem Exzenterlager angeordnet.
Diese beiden Lager bestehen je aus der Kugel 56, 178 - vorzugsweise einer Wälzlagerkugel-Gleitkörper, sowie der mit der Kugel 56, 178 in Eingriff stehenden kalottenförmigen Gleitlagerschale 170, 172 sowie der die Kugel abstützenden, kalottenförmigen Vertiefungen/Ausnehmungen 176, 177 in jeweils dem mit der Kugel zusammenwirkenden Bauteil (Sattel 1 oder Zwischenstück 180), welches nicht die Gleitlagerschale aufnimmt.

Die beiden Lagerpaare sind beiderseits des Drehhebels 19 in dem zum Hebelarm (A-A) rechtwinkelig angeordneten traversenartig ausgebildeten rechteckigen Abschnitt 158 des Drehhebels 19 aufgenommen. Die Gleitkugeln 56a, 56b und 178a, 178b sind somit am traversenartigen Abschnitt 158 des Hebels an gegenüberliegenden Seiten desselben mit entgegengesetzter Druckrichtung angeordnet.

Die Gleitkugeln 56a, 56b und 178a, 178b sind ferner mit ihren Kugelmittelpunkten sowohl in Längsrichtung des traversenartigen Hebelabschnittes (also senkrecht zum Hebelarm A-A in Fig. 1, parallel zur Bremsscheibe 1) als auch quer zu dieser Längsrichtung voneinander beabstandet.

Die Beabstandung x quer zur Längsrichtung definiert die Exzentrizität der die Kraftübersetzung bewirkenden Exzenteranordnung.

Die Beabstandung y in Längsrichtung ist dagegen notwendig, um Überschneidungen der beiden Lager zu vermeiden bzw. um diese gemeinsam im Drehhebel unterbringen zu können.

Die jeweils im traversenartigen Abschnitt 158 des Drehhebels 19 einander gegenüberliegenden Lager sind so in diesem Abschnitt 158 angeordnet, daß die Kugelmittelpunkte nahezu oder vollständig auf einer Verbindungsebene mit dem Drehpunkt der Betätigung am Hebelarm liegen (Ausnehmung 150, siehe die Linie "L" in Fig. 10).

Es ist allerdings auch denkbar, daß die Position des Exzenterlagers zur Erzielung einer definierten Veränderung des Übersetzungsverhältnisses in Abhängigkeit von der Hebelstellung um einen vorgegebenen Betrag von der Verbindungsebene des Mittelpunktes der Hebelbetätigung zu den Hebellagermittelpunkten abweicht.
Das jeweils obere Lager, d.h. das auf der Seite der Hebelbetätigung liegende Lager, bewirkt die Abstützung des Drehhebels 19 gegen den Bremssattel. Das jeweils untere Lager überträgt die Betätigungskraft auf das bzw. die auf die zuspannseitigen Druckstücke .

Die Gleitlagerschalen können wie in Fig. 8 sowohl im Drehhebel 19 als auch (nicht dargestellt) im jeweils abgewandten Teil des Sattels 1 oder der Zwischenelemente 190 oder auf beiden Seiten der Kugeln 56, 178 angeordnet sein.

Besonders vorteilhaft ist es, die Kugeln 56, 178 im jeweils der Gleitlagerschale abgewandten Bauteil in einen Kalottendurchmesser aufzunehmen der um einen vorgegebenen Betrag größer ist als der Kugeldurchmesser, so daß die Kugel bei der Betätigung des Drehhebels 19 neben der Gleitbewegung in der Lagerschale auch eine begrenzte Rollbewegung in der gegenüberliegenden Aufnahmekalotte ausführt und damit die notwendige Gleitbewegung in der Lagerschale zur Ausführung des Hebel-Schwenkhubes und damit auch die Lagerreibung reduziert.

Das Aufnahmespiel der Gleitkugel in der Aufnahmekalotte ermöglicht es auch, die ansonsten notwendige Kippbewegung des Kolbens zu vermeiden. In diesem Fall wird der ausschließlich drehbeweglichen Mitnahme des Kolbens eine Ausgleichsbewegung im Drehgelenk überlagert.

Zur Erzielung eines ausreichenden Rollspiele in Schwenkrichtung des Drehhebels 19 bei gleichzeitig guter Führung quer zur Schwenkrichtung kann die Hebelkalotte (Ausnehmung 162) torusförmig mit einem größeren Kalottendurchmesser in Schwenkrichtung als quer zu dieser Schwenkrichtung ausgestattet werden.

Durch die in Fig. 7 bis 10 dargestellte Ausgestaltung des Drehhebels 19 wird in besonders unkomplizierter Weise die Verwendung besonders einfachen und kostengünstigen Kugelgleitlagern möglich.

Die Verformung des Drehhebels 19 infolge des axialen Abstandes der Krafteinleitung in die Lager eines Lagerpaares und des daraus resultierenden Biegemomentes ist durch die traversenartige Ausgestaltung minimierbar.
Aufgrund der Kugelform der Lagerelemente ist ein verkantender Lauf der Lager vollständig ausgeschlossen, d.h. auch bei Auftreten von Verformungen des Drehhebels wird die Tragfähigkeit und die maximal erreichbare Lebensdauer der Kugelgleitlager in vollem Umfang ausgenutzt.

Der Drehhebel 19 wird ferner durch die Kugeln 56 relativ zum Sattel genügend fixiert, so daß eine weitere ggf. reibungsbehaftete Führung des Drehhebels nicht mehr erforderlich ist.

Für den Sonderfall einer Bremse mit nur einem Nachstell-Dreheinrichtung bzw. nur einer Spindel auf jeder Seite der Bremsscheibe oder auf einer Seite der Bremsscheibe kann der Drehhebel mit zwei Hebellagern an den Enden des traversenartigen Abschnittes 158 und mit nur einem Exzenterlager in der Mitte ausgebildet sein (nicht dargestellt).

Der Drehhebel 19 der Fig. 1 bis 10 eignet sich für Sattelausbildungen aller Art, so für quasi alle Sattelformen, insbesondere auch der Fig. 1 (Schwenksattel, Schiebesattel, Festsattel).

Es ist auch denkbar, daß die im wesentlichen kugelförmigen Lagerelemente 158, 160 und die zugehörigen Kalotten eine gegenüber einer Kugelgeometrie abgeflachte, elliptische Formgebung aufweisen.

Fig. 12 und Fig. 13 zeigen beispielhaft die möglichen Sattelgeometrien der Sattelteile 1a und 1b.

Das reaktionsseitige Sattelteil 1a der Fig. 12 weist eine Ausnehmung 200 zur Aufnahme des Nachstellermodules 100 auf, die mit zwei Vertiefungen 200a, 200b zur Aufnahme der Enden der Druckstücke 29a, 29b versehen ist. Um die Ausnehmung 200 herum sind Bohrungen 204 verteilt, an welchen die Montageplatte 104 verschraubbar ist.

Das zuspannseitige Sattelteil 1b der Fig. 13 weist dagegen eine die Sattelwandung zur Bremsscheibe 1 hin durchsetzende Aussparung 206 auf, in welche das Nachstellermodul 100 einsetzbar ist, wobei um die Ausnehmung 206 herum wiederum Bohrungen 204 verteilt sind, an welchen die Montageplatte 104 (ggf. mit zusätzlichem umlaufenden Dichtring) verschraubbar ist.

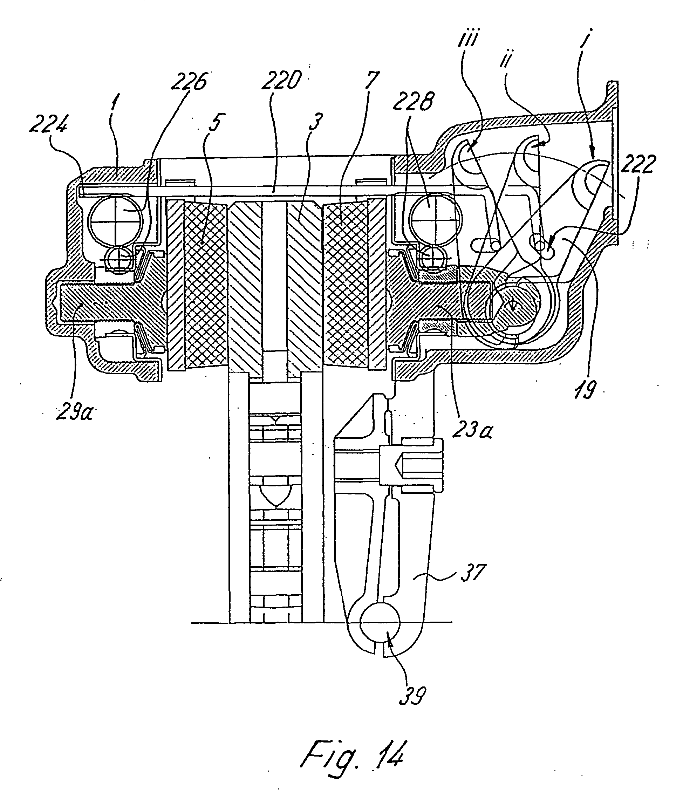

Fig. 14 zeigt einen Schnitt durch eine Scheibenbremse, deren Grundprinzip der Fig. 1f entspricht und die ferner wesentliche Gedanken der weiteren Ausführungsbeispiele nutzt.

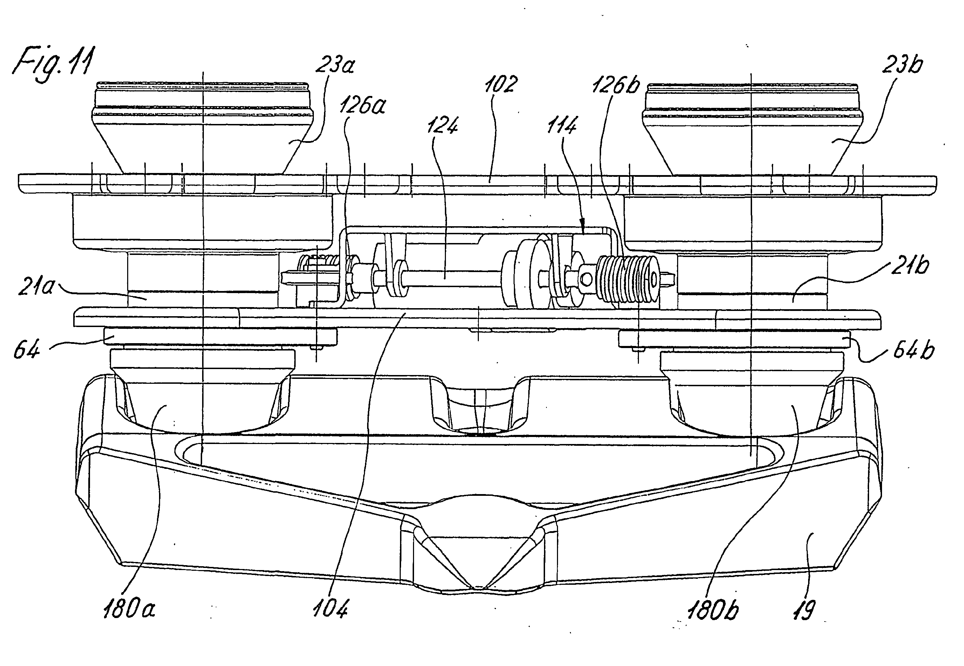

Fig. 1f zeigt dagegen eine Scheibenbremse mit einem verschwenkbaren Bremssattel 1, der das Schwenklager 39 zum Achsflansch 11 aufweist. Der über die zweiteilige Strebenverbindung 37 am Schwenklager gelagerte "Schwenksattel" ist um einen Winkelbetrag α verschwenkbar, der so groß ist, daß die Bremsbeläge 5, 7 um den Weg des Arbeitshubes relativ zur Bremsscheibe 3 verschwenkbar sind. Auch diese Scheibenbremse weist wiederum nur einseitig der Bremsscheibe 3 eine Zuspanneinrichtung mit dem Drehhebel 19 nach Art der Fig. 10 und 11 aber beidseitig der Bremsscheibe 3 wenigstens eine Nachsteller-Dreheinrichtung mit Druckstücken 23a, b und 29a, b sowie den Nachstellhülsen 21a,b und 27a, b auf.

Gut zu erkennen ist in Fig. 14 der axiale Versatz des Drehhebels in dessen unterem traversenartigen Bereich in der Höhe der Druckstücke 23 relativ zur Bremsscheibe 3 bei dessen Bewegung von der Position "i" über die Position "ii" in die Position "iii". Die Synchronisation der der Nachsteller-Dreheinrichtung mit den Druckstücken 23a, b und 29a, b sowie den Nachstellhülsen 21a,b und 27a, b wird hier dadurch erreicht, daß ein Mitnehmer 220 am Drehhebel 19 in einem Langloch 222 desselben angelenkt ist. Der Mitnehmer 220 ist stangenartig ausgebildet und übergreift den oberen Umfangsrand der Bremsscheibe 3. Er ist ferner an seiner zur Bremsscheibe 3 gewandten Seite abschnittsweise mit einer Art Zahnstangenprofil 224 versehen, welches mit Zahnrädern 226, 228 kämmt, welche bei einem axialen Verschieben des Mitnehmers 220 die Nachstellhülsen 21, 27 drehen und die Nachstellung bewirken. Auf jeder Seite der Bremse ist dabei eine Freilauf- und Überlasteinrichtung vorzusehende sowie eine Synchronisation der beiden Nachsteller-Dreheinrichtungen auf jeder Seite der Bremsscheibe.

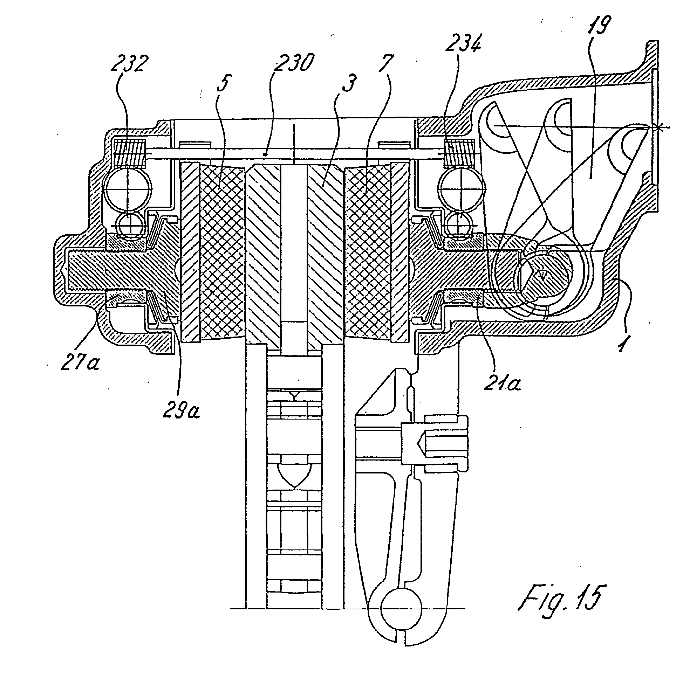

Die Zuspannmechanik der Fig. 15 entspricht der der Fig. 14. Die Nachstellsynchronisation erfolgt jedoch über einen die Bremsscheibe übergreifende Welle 230 mit Zylinderschnecken 232, 234 an deren Enden.

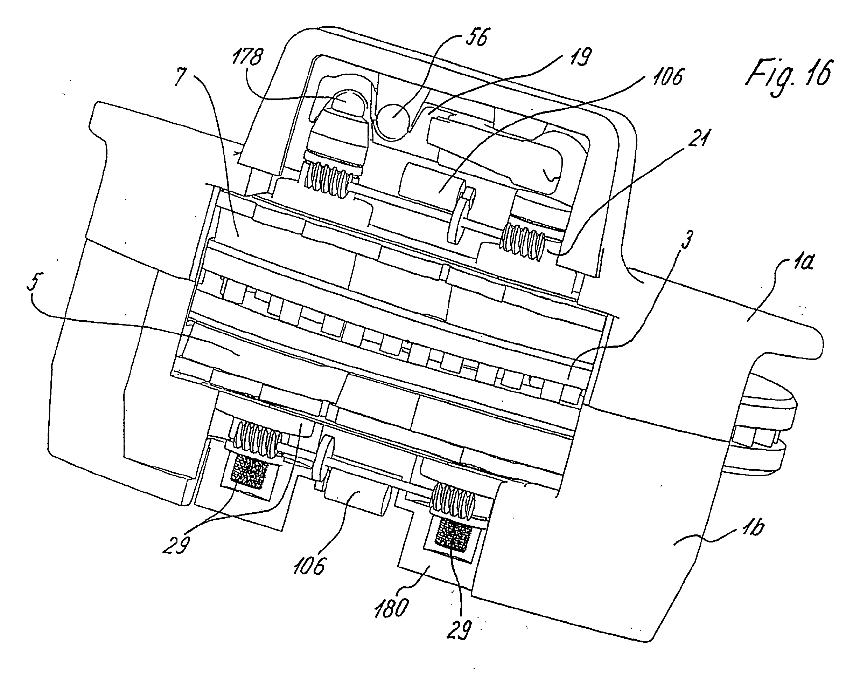

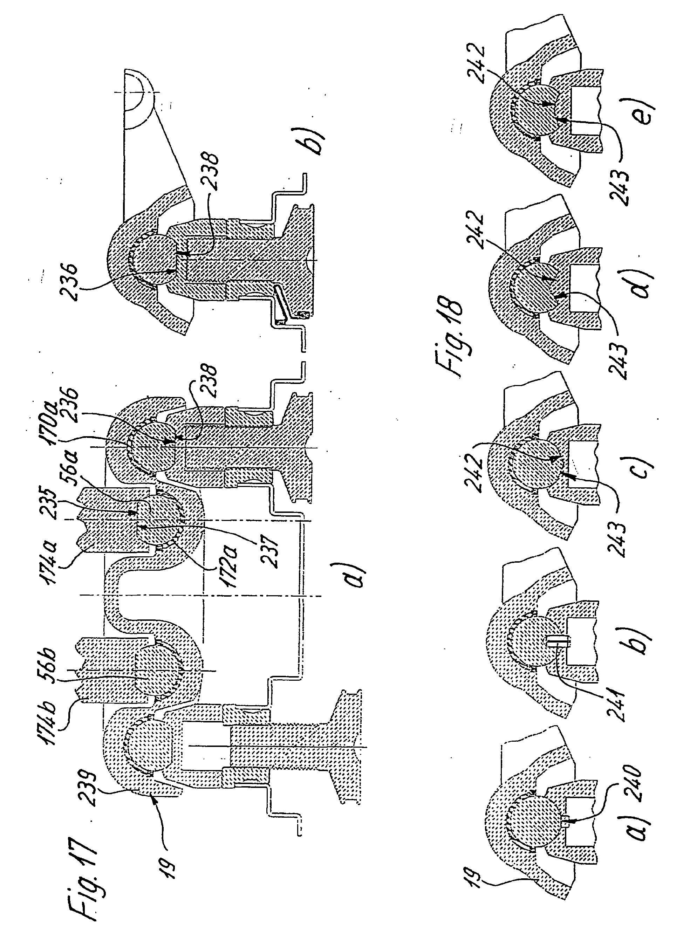

Fig. 16 veranschaulicht rein schematisch die Anordnung von elektromotrischen Nachstell-Antrieben 106 auf jeder Seite der Bremsscheibe. Nach Fig. 17a und b weisen die im wesentlichen kugelförmigen Lagerelemente 56, 178 und deren Aufnahmen 235, 236 - hier an den Bauteilen 174a,b und an den Zwischenstücken 180a,b an deren zueinander weisenden Seiten miteinander korrespondierende Abflachungen 237, 238 auf.

Auf diese Weise wird eine unkomplizierte Verdrehsicherung gewährleistet, um Beschädigungen an der Kugeloberfläche und/oder der Lager im Bereich der Lager zu verhindern. Die Abflachungen 237, 238 tragen zudem zu einer Optimierung des Raumbedarfes der Lager und zu einer Erhöhung der Festigkeit bei.

Ein Spiel zwischen den im wesentlichen kugelförmigen Lagerelementen (56, 178) und deren Aufnahmen 235, 236 ermöglicht auf einfache Weise einen Toleranzausgleich.

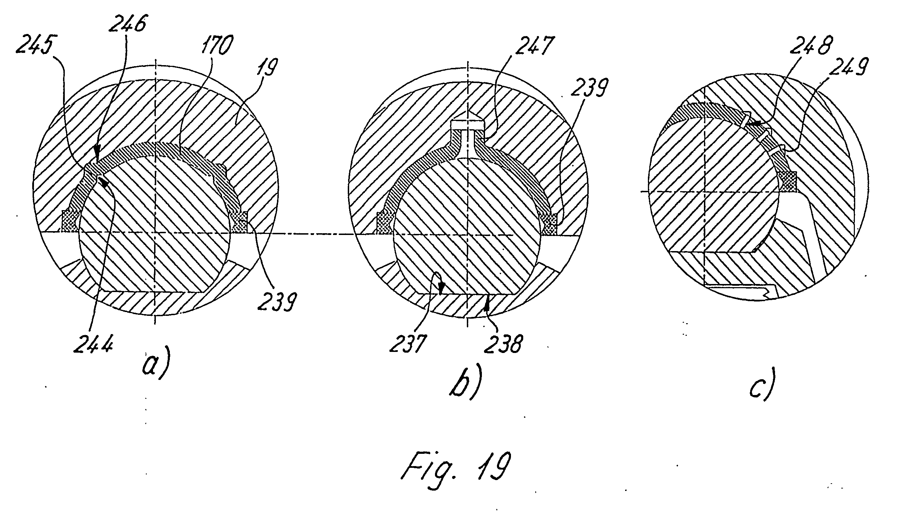

Ein Abstreifer 239 - z.B. in Ringform - an den Lagerkalotten 158, 160 verhindert wie in Fig. 19 zu erkennen - auf einfache Weise das Austreten der Fettfüllung.

Fig. 18 zeigt weitere Varianten von Einrichtungen von Verdrehsicherungen zwischen den im wesentlichen kugelförmigen Lagerelementen 56, 178 und deren Aufnahmen 235, 236.

So sind nach Fig. 18a die Einrichtungen zur Verdrehsicherung als stumpf- oder reibgeschweißter Sitz 240 ausgebildet.

Nach Fig. 18b sind die Einrichtungen zur Verdrehsicherung als Spannstift oder Spannhülse 241 ausgebildet.

Nach Fig. 18e, f und g weisen die im wesentlichen kugelförmigen Lagerelemente 56, 178 und deren Aufnahmen 235, 236 als Einrichtung zur Verdrehsicherung an deren zueinander weisenden Seiten miteinander korrespondierende verdrehsichere Geometriegebungen auf, und zwar nach Art von miteinander korrespondierenden, ineinander greifenden Vertiefungen 242 und Vorsprüngen 243, die kegelförmig (konkav/konvex, siehe Fig. 18c und d) oder kugelschalen- bzw. -abschnittsförmig (siehe Fig. 18e) ausgebildet sind.

Die verschiedenen Geometrien können z.B. durch ein Abschleifen handelsüblicher Lagerkugeln erreicht werden.

Fig. 19a veranschaulicht neben den Abstreifern noch lagefixierende miteinander korrespondierende Vorsprünge 244 und Ausnehmungen zwischen den Lagerkugeln und den Lagerschalen, wobei die Lagerschalen-Ausnehmungen als Ausprägungen 245 ausgebildet sind, welche an ihrer von den Lagerkugeln abgewandten Seite ihrerseits wiederum in korrespondierende Ausnehmungen 246 im korrespondierenden Bauelement - hier im Drehhebel - eingreifen, so daß auch zwischen den Lagerschalen 170, 172 und dem Drehhebel eine Lagefixierung erreicht wird.

Nach Fig. 19b wird ein zylindrischer Fortsatz 247 an der Lagerschale ausgebildet, welcher in das korrespondierende Bauelement - hier der Drehhebel 19 - eingreift und sowohl lagefixierend als auch als Fettreservoir dient.

Nach Fig. 19b sind in der Lagerschale Bohrungen 248 zum Fettdurchlaß für eine verbesserte Schmierung vorgesehen, welche in Fettaufnahmerillen 249 im korrespondierenden Bauteil - hier der Drehhebel 19 - münden.

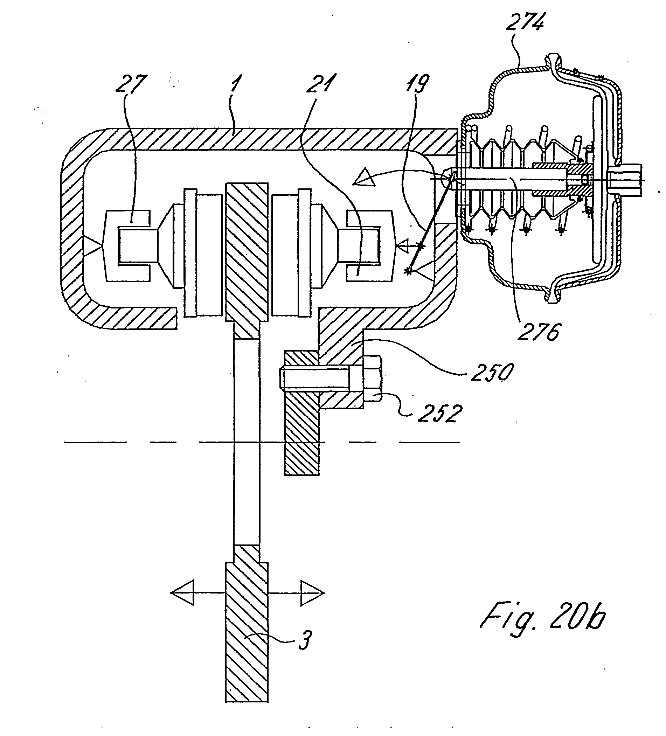

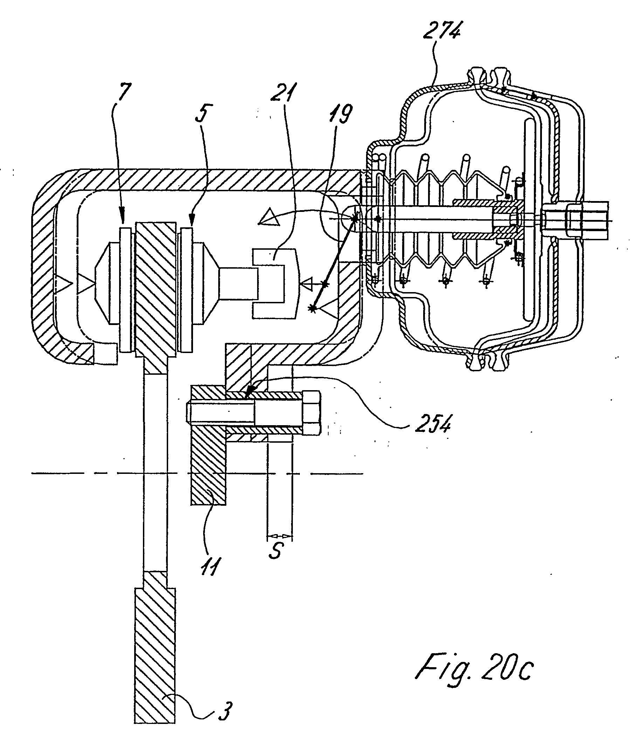

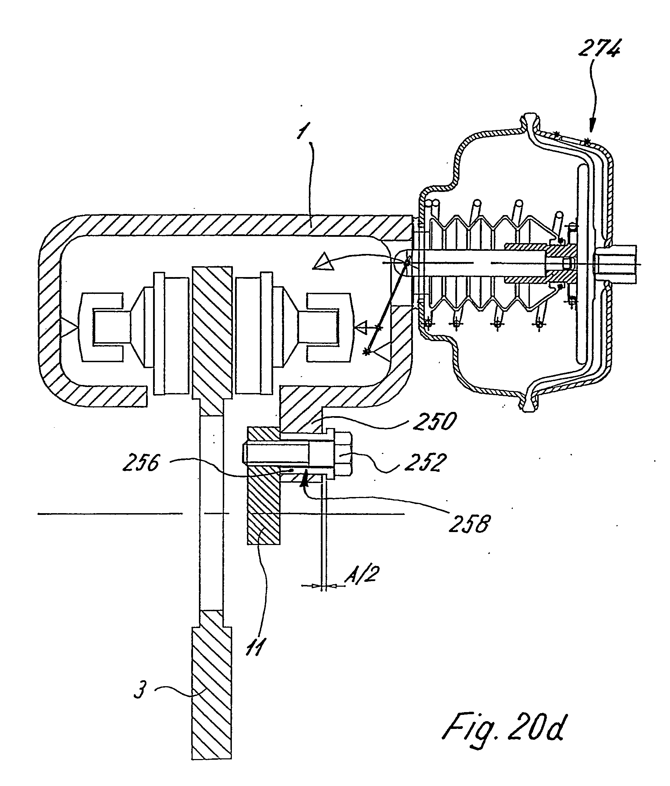

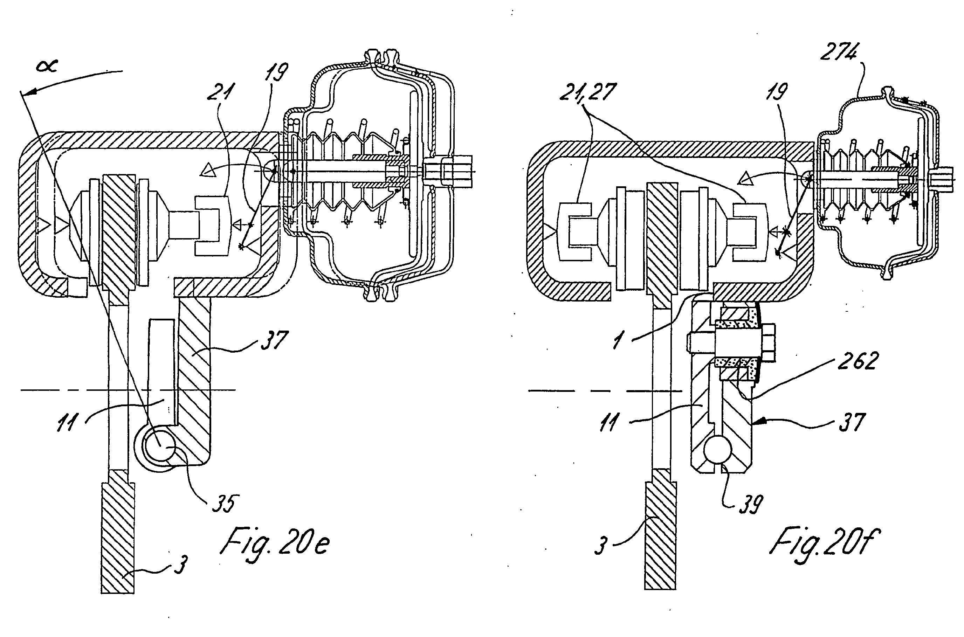

Fig. 20 a- zeigen zu Fig. 1 analoge Scheibenbremsen in detaillierterer Darstellung.

So weist die Scheibenbremse der Fig. 20a wiederum einen Festsattel bzw. einen fest und unbeweglich an der Achse befestigbaren Bremssattel 1 auf, so daß beidseits der Bremsscheibe Zuspanneinrichtungen 13, 15 zum Zuspannen (und Lösen) der Bremsbeläge 5, 7 in Richtung der Bremsscheibe 3 vorgesehen sind, die wiederum jeweils wenigstens eine der Nachstell-Dreheinrichtungen mit jeweils einer Nachstellhülse 21, 27 aufweisen, in welcher jeweils eines der Druckstücke 23, 29 verschraubbar angeordnet ist. Die beiden Drehhebel 19, 25 sind über die Koppelmechanik in Form des Bolzens 31 miteinander gekoppelt.

Gut zu erkennen sind der Bremszylinder 274 - pneumatisch betätigt - und die auf den Drehhebel einwirkende Kolbenstange 276, welche am oberen Ende des Drehhebels 19 angelenkt ist. Die pneumatische Betätigung wird als kompakt bauend bevorzugt, ebenfalls denkbar wäre eine elektromechanische Betätigung.

Nach Fig. 20b, d und f weist dagegen der Bremssattel jeweils nur auf einer Seite der Bremsscheibe 1 eine Zuspanneinrichtung 13 auf, wobei die Erzeugung der Reaktionskraft auf der der Betätigungseinrichtung abgewandten Seite der Bremse durch Verschieben oder Verschwenken des Bremssattels 1 und/oder durch Verschieben der Bremsscheibe 3 erfolgt. Die Verschleißnachstellung auf der Reaktionsseite wird dabei jeweils durch eine in den Bremssattel auf der Reaktionsseite integrierte Nachstell-Einrichtung, z.B. ein Nachstellmodul, realisiert.

Der von dem Bremssattel 1 und/oder der Bremsscheibe 3 auszuführende Schiebe-oder Schwenkweg wird auf den zur Aufbringung der Reaktionskraft erforderlichen Krafthub begrenzt, der nur einen Bruchteil des Verschleißhubes ausmacht.

Nach Fig. 20b sind beidseits der Scheibenbremse Nachstell-Einrichtungen angeordnet, die wiederum die miteinander verschraubten und damit auch relativ zueinander axial verstellbaren Nachstellhülsen 21, 27 und Druckstücke 23, 29 sowie vorzugsweise auch separate Nachstellerantriebe beidseits der Bremsscheibe 3 aufweisen. Die Bremsscheibe 3 ist als Schiebescheibe ausgebildet, wozu die Bremsscheibe vorzugsweise mit einer Verzahnung im Bereich ihrer Nabe versehen ist, welche einen auf den Krafthub begrenzten Schiebeweg aufweist.

Fig. 20c zeigt wie Fig. 1c den Stand der Technik eines Schiebesattels, bei dem der Bremssattel 1 als Schiebesattel mit einem Sattellager ausgebildet ist, welches über den Weg des Krafthubes relativ zur Bremsscheibe bzw. zur Radachse 9 oder dem üblicherweise bei Schiebesattel-Scheibenbremsen vorgesehenen Bremsträger (hier nicht abgebildet) verschieblich ist. Die Lagerbuchse 254 ist dabei zur Überbrückung eines Verschiebeweges S ausgelegt, der im wesentlichen dem Betrag des maximalen Bremsbelagverschleisses (hier ebenfalls mit "S" bezeichnet) entspricht.

Nach Fig. 20d ist der Bremssattel 1 "mikroverschiebbar" um einen Betrag, der nicht größer als der Arbeitshub ist (vorzugsweise um den Betrag des halben Arbeitshubes). Die Scheibenbremse der Fig. 20d umfaßt separate Nachstell-Einrichtungen (Elemente 21, 23 und 27, 29 abgebildet) auf beiden Seiten der Bremsscheibe 3, wobei ein unterer Ansatz 250 am Bremssattel 1 ausgebildet ist, welcher mittels Bolzen 252 mit dem Achsflansch 11 verschraubt ist. Der/die Bolzen durchgreift/en eine Lagerbuchse 256, welche in eine Öffnung 258 des Ansatzes 250 des Bremssattels 1 eingeschraubt und derart ausgelegt ist, daß eine Verschiebbarkeit des Bremssattels 1 relativ zum Achsflansch 11 um den Betrag des halben Arbeitshubes "A/2" erreicht wird.

Fig. 20e zeigt eine sogenannte Schwenksattel-Scheibenbremse, bei welcher der Bremssattel am Bremsträger oder einem Achsteil um einen vorgegebenen Winkelbetrag verschwenkbar gelagert ist (Schwenklager 35 mit Strebenverbindung 37 zum eigentlichen Schwenk-Bremssattel 1) .

Nach Fig. 20e ist dieser Verschwenkwinkel α derart groß gewählt, daß der gesamte Verschleißnachstellweg beim Verschwenken des Bremssattels überbrückbar ist.

Der prinzipielle Aufbau der Zuspannmechanik im inneren des Bremssattels entspricht bei dieser Variante wiederum der Zuspannmechanik der Fig. 1c, d.h. auf der Reaktionsseite sind keine Nachstellkomponenten vorgesehen sondern der dort angeordnete Bremsbelag stützt sich am Bremssattel direkt oder indirekt ab, wobei zwischen Bremsbelag und Bremssattel keine Nachstellmöglichkeit gegeben ist.

Fig. 20f zeigt dagegen eine Scheibenbremse mit einem verschwenkbaren Bremssattel 1, der wiederum ein Schwenklager 39 aufweist. Der über die Strebenverbindung 37 am Schwenklager gelagerte "Schwenksattel" ist aber lediglich um einen Winkelbetrag α verschwenkbar, der so groß ist, daß die Bremsbeläge um den Weg des halben Arbeitshubes relativ zur Bremsscheibe 3 verschwenkbar sind. Auch diese Scheibenbremse weist wiederum nur einseitig der Bremsscheibe 3 eine Zuspanneinrichtung aber beidseitig der Bremsscheibe wenigstens eine Nachstelleinrichtung auf.

Zur Bewegungsbegrenzung bzw. Verstellwinkelbegrenzung ist der Bremssattel 1 wiederum mit einem unteren Ansatz 260 zur Ausbildung der Strebenverbindung 37 versehen, der mittels eines Bolzens 252 mit dem Achsflansch 11 verschraubt ist. Der Bolzen durchgreift eine Lagerbuchse 262, welche hier beispielhaft als Gummilagerbuchse mit integrierter Einrichtung zur Rückstellung (Tellerfeder o.ä.) ausgebildet ist, wobei die Gummilagerbuchse derart ausgelegt ist, daß eine derartige Verschwenkbarkeit gewährleistet wird, daß der Bremssattel im Bereich der Beläge um den Betrag des halben Arbeitshubes "A/2" verschwenkt wird.

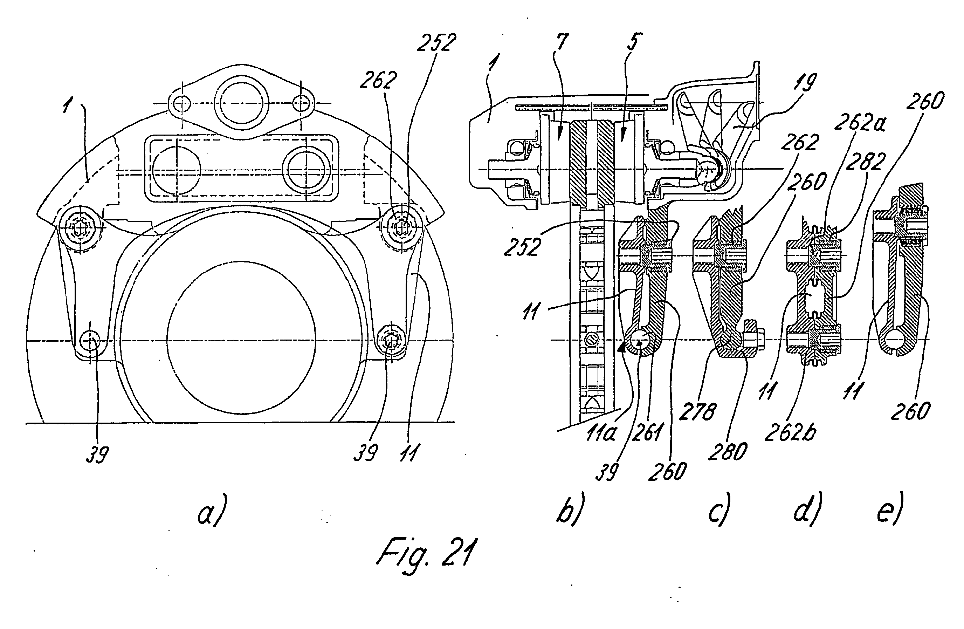

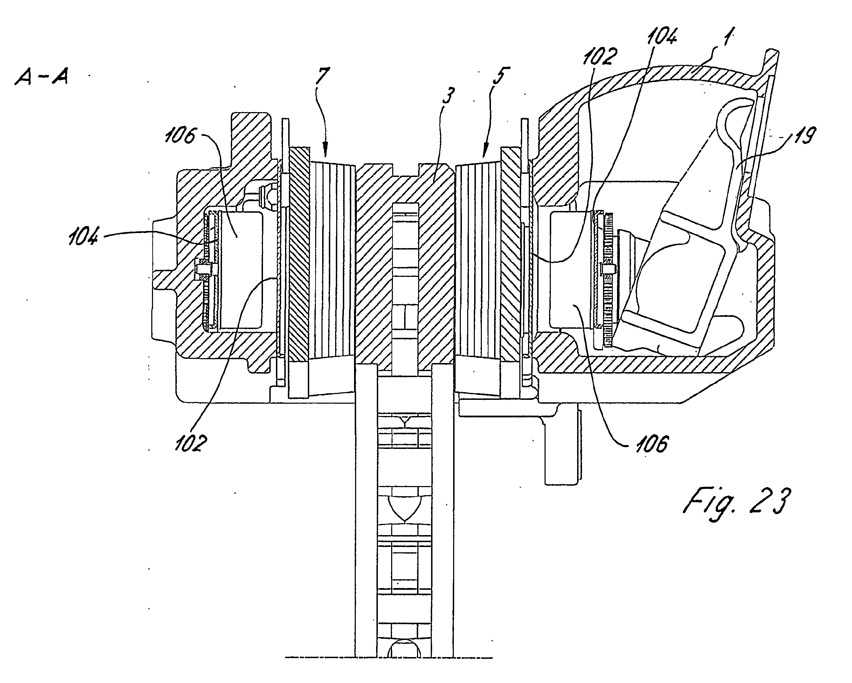

Fig. 21a und b zeigen eine weitere Darstellung einer Bremse nach Art der Fig. 20f, wobei nach Fig. 21a der Ansatz 260 um einen zylindrisches Lagerbolzen 261, welches in einer Ausnehmung 11a des Achsflansches 11 verdrehbar ist, verschwenkbar ist. In Fig. 21a ist ferner zu erkennen, daß zwei Lager 29 vorgesehen sind. Der Aufbau des Zuspannsystemes und des Nachstellsystemes entspricht Fig. 23.

Nach Fig. 21c ist der Ansatz dagegen an seinem vom übrigen Bremssattel 1 abgewandten Ende mit einer kugelartigen oder zylindrischen Lageransatz 278 versehen, welcher in einer Ausnehmung 280 gelagert ist.

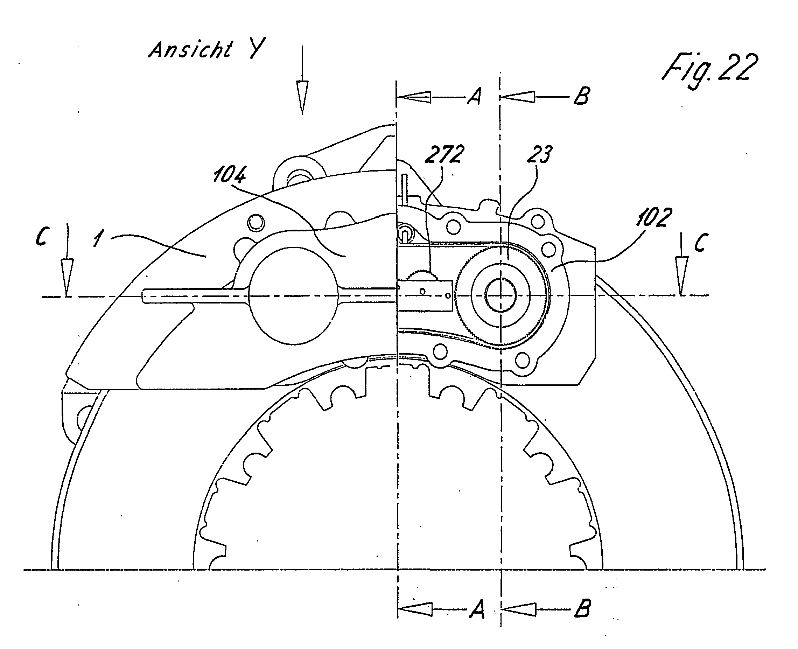

Nach Fig. 22d sind zur Realisierbarkeit der Verschwenkbarkeit zwei Lagerbuchsen 262a, 262b vorgesehen, die in einem Gummiring 282 eingefaßt sind.

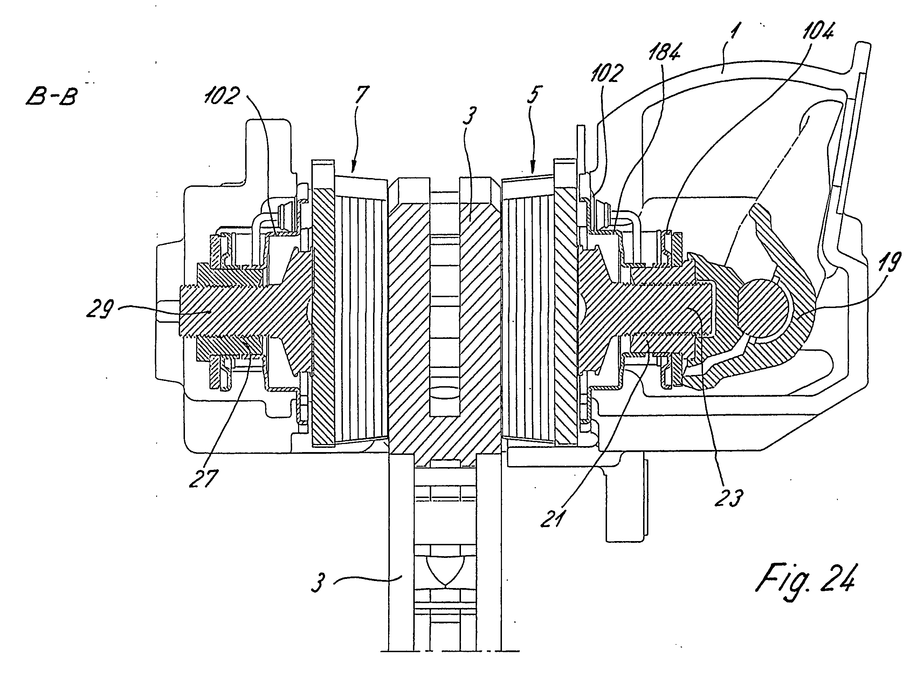

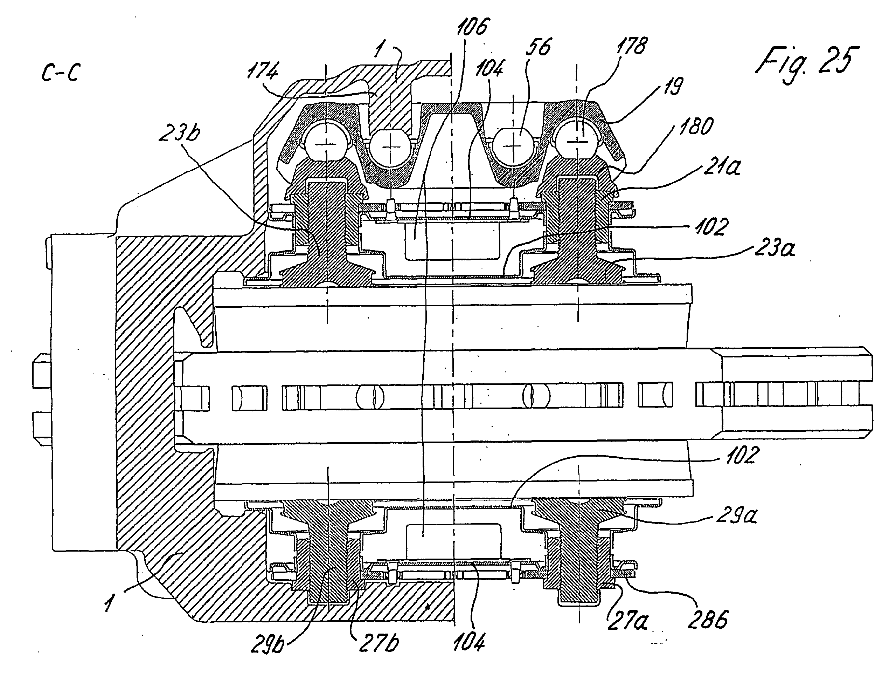

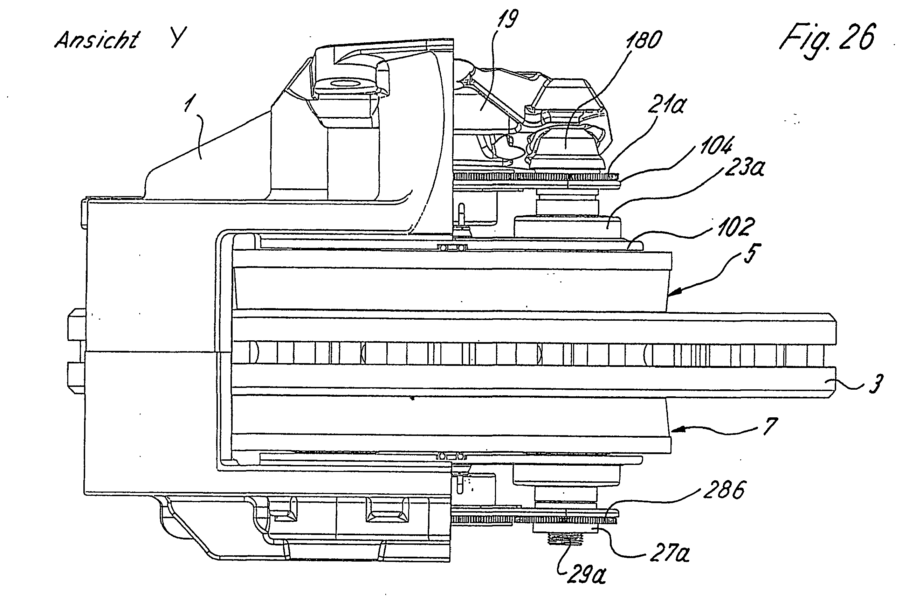

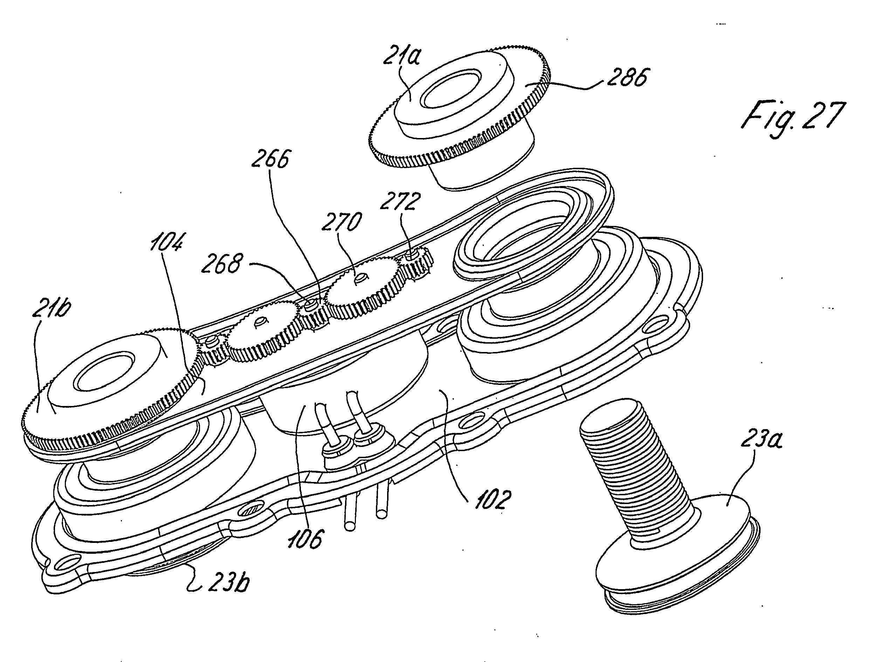

Die nach Fig. 22 bis Fig. 27 ausgebildete Scheibenbremse läßt sich als "Mikroverschiebe-Scheibenbremse" nach Art der Fig. 1d und 20d am Achsflansch oder Bremsträger montieren (hier nicht abgebildet). Alternativ wäre auch eine Auslegung als "Mikroschwenk-Scheibenbremse" nach Art der Fig. 20f denkbar.

Der oberhalb der Bremsscheibe mit einer Aussparung versehene Bremssattel 1 umgreift im oberen Umfangsbereich rahmenartig die Bremsscheibe 3, die Bremsbeläge 5, 7, die einseitig von der Bremsscheibe ausgebildete Zuspanneinrichtung 13 und die beiden Nachstelleinrichtungen auf beiden Seiten der Bremsscheibe 3.

Gut in Fig. 23 zu erkennen ist die Aussparung 206 für das Nachstellmodul auf der Reaktionsseite. Verschlossen wird der Bremssattel an seiner der Bremsscheibe zugewandten Seite jeweils von der Montage- oder Grundplatte 104. Pro Nachstellmodul auf jeder Seite der Bremsscheibe liegt jeweils einer der Elektromotoren 106 mittig zwischen den beiden Druckstücken 23a,b; 29a,b und den Nachstellhülsen 21a,b; 27a,b, wobei eine mit einem Abtriebszahnrad 266 versehene Abtriebswelle 268 die Montageplatte 102 durchsetzt, wo sie in konstruktiv einfacher und kostengünstiger Weise mit zwei einander am Außenumfang der Abtriebswelle gegenüberliegenden Zahnrädern 270, 272 kämmt, welche wiederum mit den an ihrem Außenumfang verzahnten oder mit einem Zahnrad 286 Nachstellhülsen 21, 23 kämmen. Die Montageplatte 104 und das Montageformteil 102 sind mit Ausprägungen zur Aufnahme der Druckstücke 23, 29 und der Nachstellhülsen 21, 27 versehen.

Bei der Montage wird zunächst der Drehhebel 19 in den Bremssattel eingesetzt, woraufhin dann die beiden Nachstellmodule in den Bremssattel eingesetzt wird, wobei die Montageplatten 104 jeweils mit dem Bremssattel verschraubt werden. Fig. 1a zeigt eine Scheibenbremse, die einen Bremssattel 1 aufweist, welcher eine Bremsscheibe 3 in ihrem oberen Umfangsbereich umfaßt. Beidseits der Bremsscheibe 3 sind in Richtung der Bremsscheibe und von dieser weg - d.h., senkrecht zur Ebene der Bremsscheibe 3 - verschiebliche Bremsbeläge 5, 7 angeordnet, die in üblicher Weise aus einem Bremsbelagträger 5a, 7a und dem darauf aufgebrachten Belagmaterial 5b, 7b bestehen.

### Bezugszeichen

- Bremssattel: 1
- Bremsscheibe: 3
- Bremsbeläge: 5, 7
- Bremsbelagträger: 5a, 7a
- Belagmaterial: 5b, 7b
- Bolzen: 9
- Achsflansch: 11
- Zuspanneinrichtungen: 13, 15
- Öffnung: 17
- Drehhebel: 19
- Nachstellhülse: 21
- Druckstück: 23
- Drehhebel: 25
- Nachstellhülse: 27
- Druckstück: 29
- Schwenklager: 35
- Strebenverbindung: 37
- Schwenklager: 39
- Nachstellermodul: 50
- Abtriebszahnrad: 52
- Freilauf-und/oder Überlastkupplungseinrichtung: 53
- Synchronisationskette: 54
- Lagerkugeln: 56a,b
- Zahnräder: 58a,b, 60a,b
- Wellen: 59a,b
- Zylinderschnecken: 62a,b
- Zahnräder: 64a, b; 66a,b
- Synchronisationsketten: 68, 70
- Bowdenzug: 72
- Kabelkanal: 74
- Dichtungsstopfen: 76
- Mitnehmer: 82
- Schaltgabel: 84
- Welle: 86
- Nachstellermodul: 100
- Montageplatten: 102, 104
- Elektromotor: 106
- Übersetzungsgetriebe: 108
- Bohrungen: 110
- Montageblech: 114
- Distanzstücke, Abwinklungen: 116, 118
- Zahnräder: 117a,b
- Abtriebszahnrad: 120
- Zahnrad: 122
- Welle: 124
- Zylinderschnecken: 126a, b
- Zahnrädern: 128a, 128b
- Wellen: 130a, 130b
- Zahnräder: 132a, 132b
- Ausnehmung: 150
- dreieckförmiger Abschnitt: 152
- Ausnehmungen: 154, 156
- traversenartiger Abschnitt: 158
- Ausnehmungen: 160a,b, 162a,b und 164, 165
- Gleitlagerschalen: 170a,b 172a,b
- Bauteile: 174a, b
- Ausnehmungen: 176, 177
- kugelartige Enden oder Kugeln: 178a, b
- Zwischenstücke: 180
- Ausnehmung: 200
- Vertiefungen: 200a, 200b
- Bohrungen: 204
- Aussparung: 206
- Mitnehmer: 220
- Langloch: 222
- Zahnstangenprofil: 224
- Zahnräder: 226,228
- Welle: 230
- Zylinderschnecken: 232,234
- Aufnahmen: 235,236
- Abflachungen: 237,238
- Abstreifer .: 239
- Sitz: 240
- Spannhülse: 241
- Vertiefungen: 242
- Vorsprünge: 243
- Vorsprünge: 244
- Ausprägungen: 245
- Ausnehmungen: 246
- Fortsatz: 247
- Bohrungen: 248
- Fettaufnahmerillen: 249
- Ansatz: 250
- Bolzen: 252
- Lagerbuchse: 254
- Lagerbuchse: 256
- Öffnung: 258
- Ansatz: 260
- Lagerbuchse: 262
- Abtriebszahnrad: 266
- Abtriebswelle: 268
- Zahnräder: 270,272
- Bremszylinder: 274
- Kolbenstange: 276
- Lageransatz: 278
- Ausnehmung: 280
- Gummiring: 282
- Verschiebewege: S, A/2

## Patentansprüche

1. Scheibenbremse, insbesondere für Nutzfahrzeuge, bei welcher nur auf einer Seite einer Bremsscheibe (3) eine elektromotorische oder pneumatische Krafterzeugungseinrichtung angeordnet ist mit
a) einem die Bremsscheibe (3) übergreifenden Bremssattel (1),
b) mindestens einer am Bremssattel angeordneten Zuspanneinrichtung (13) zum Zuspannen mindestens eines Bremsbelages (7) in Richtung derselben,
c) sowie einem im Bremssattel (1) angeordneten Nachstellsystem zum Ausgleich von Bremsbelag- und/oder Scheibenverschleiß durch Verstellen des Abstandes zwischen Bremsbelag (7) und Bremsscheibe (3),
d) wobei das Nachstellsystem wenigstens eine Nachstell-Einrichtung aufweist, insbesondere eine Dreheinrichtung,
e) wobei das im Bremssattel (1) angeordnete Zuspannsystem einen von einer Stange betätigbaren Drehhebel (19) aufweist,
**dadurch gekennzeichnet, daß**
f) der Drehhebel (19) der an einem seiner Enden eine Ausnehmung (150) zur Aufnahme des Stangenendes aufweist und an seinem von der Ausnehmung (150) abgewandten Endbereich an zwei seiner Außenseiten Ausnehmungen (160, 162) aufweist, in welche kalottenartige Lagerschalen (170, 172) und/oder kugelartige Lagerelemente (56, 178) zur Lagerung des Drehhebels (19) einsetzbar sind,
mit denen der Drehhebel (19) am Bremssattel (1) und an wenigstens einem Druckstück (23) zum Verschieben des Bremsbelages (7) in Richtung der Bremsscheibe (3) gelagert ist.

2. Scheibenbremse nach Anspruch 1, **dadurch gekennzeichnet, daß** das Nachstellsystem wenigstens eine oder mehrere der Nachstelleinrichtungen auf jeder Seite der Bremsscheibe (3) aufweist, so daß die axialen Abstände zwischen den beiden Bremsbelägen (5, 7) und der Bremsscheibe (3) beidseits der Bremsscheibe verstellbar sind.

3. Scheibenbremse nach Anspruch 1 oder 2, **dadurch gekennzeichnet, daß**
a) beidseits der Bremsscheibe (3) jeweils eine der Zuspanneinrichtungen (13, 17) zum Zuspannen der Bremsbeläge (5, 7) angeordnet ist,
b) wobei die Zuspanneinrichtungen (13, 17) auf den beiden Seiten der Bremsscheibe (3) über eine Kopplungseinrichtung derart miteinander gekoppelt sind, daß sie ausschließlich synchron bewegbar sind, und
c) wobei der Bremssattel (1) relativ zum Achsflansch (11) unverschiebbar als Festsattel ausgelegt ist (Fig. 1a).

4. Scheibenbremse nach Anspruch 2 oder 3, **dadurch gekennzeichnet, daß** der Bremssattel mit einem oder mehreren Bolzen (9) direkt am Achsflansch (11) oder an einen Bremsträger befestigt ist.

5. Scheibenbremse nach einem der vorhergehenden Ansprüche, **dadurch** gekennzeiehnet, daß die Erzeugung der Reaktionskraft auf der Zuspannseite abgewandten Seite der Bremse durch
- Verschieben des Bremssattels (1) und/oder
- Verschwenken des Bremssattels (1) und/oder
- Verschieben der Bremsscheibe (3)
erfolgt, wobei durch die Verschiebe- und/oder Verschwenkbewegung im wesentlichen lediglich der Weg des halben Krafthubes überbrückbar ist und/oder daß die Erzeugung der Reaktionskraft auf der von der Zuspannseite abgewandten Seite der Bremse durch ein elastisches Verformen des Bremssattels und/oder der Bremsscheibe und/oder eines Elementes (292) zwischen Bremssattel (1) und Achsflansch (11) erfolgt.

6. Scheibenbremse nach Anspruch 5, **dadurch gekennzeichnet, daß** der durch die Verschiebe- und/oder Verschwenkbewegung des Bremssattels überbrückbare Weg < 4 mm beträgt.

7. Scheibenbremse nach einem der Ansprüche 4 - 6, **dadurch gekennzeichnet, daß** die Bremsscheibe als Schiebescheibe ausgebildet ist, welche auf einer Bremsscheibennabe derart verschieblich geführt ist, daß durch das Verschieben maximal ein auf den halben Krafthub begrenzter Schiebeweg realisierbar ist.

8. Scheibenbremse nach einem der Ansprüche 4 - 7, **dadurch gekennzeichnet, daß** der Bremssattel (1) als Schiebesattel ausgebildet ist, der
- ein Schiebe-Sattellager aufweist,
- welches direkt am Achsflansch (11) befestigbar ist,
- welches derart bemessen ist, daß ein auf den Krafthub begrenzter Schiebeweg überbrückbar ist.

9. Scheibenbremse nach einem der Ansprüche 4-7, **dadurch gekennzeichnet, daß** der Bremssattel (1) als Schwenksattel ausgebildet ist, der
- ein Schwenk-Sattellager aufweist,
- welches vorzugsweise direkt am Achsflansch (11) befestigbar ist,
- und mit dem ein Schwenkwinkel überbrückbar ist, welcher den Bremssattel relativ zur Bremsscheibe im wesentlichen um den Betrag des halben Krafthubes versetzt.

10. Scheibenbremse nach einem der vorstehenden Ansprüche, daß die Nachstell-Dreheinrichtungen jeweils zumindest eine Nachstellhülse (21) und eine in diese einschraubbares Druckstück (23) aufweist.

11. Scheibenbremse nach einem der vorstehenden Ansprüche, daß Nachstellsystem ferner ein- oder beidseits der Bremsscheibe einen Nachstellerantrieb aufweist, welcher als Elektromotor ausgebildet ist oder als mechanische Kopplung zur Zuspanneinrichtung.

12. Scheibenbremse nach einem der vorstehenden Ansprüche, **dadurch gekennzeichnet, daß** das Nachstellsystem ein- oder beidseits der Bremsscheibe als vormontierbares Nachstellermodul (50, 100)ausgebildet ist.

13. Scheibenbremse nach einem der vorhergehenden Ansprüche, **dadurch gekennzeichnet, daß** der Drehhebel (19) direkt oder über weitere zwischengeschaltete Elemente am Bremssattel (1) - Hebellager - und direkt oder über weitere zwischengeschaltete Elemente an dem wenigstens einen Druckstück (23) - Exzenterlager - gelagert ist.

14. Scheibenbremse nach einem der vorhergehenden Ansprüche, **dadurch gekennzeichnet, daß** die Lagerschalen (170, 172) als Gleitlagerschalen ausgebildet sind.

15. Scheibenbremse nach einem der vorhergehenden Ansprüche, **dadurch gekennzeichnet, daß** der Drehhebel (19) sich vom Bereich der oberen Ausnehmung (150) aus zu einem traversenartigen Abschnitt (158) verbreitert.

16. Scheibenbremse nach Anspruch 15, **dadurch gekennzeichnet, daß** die beiden Lagerpaare - Hebellager und Exzenterlagerung zu den Druckstücken - in dem zum Hebelarm (A-A) rechtwinkelig angeordneten, traversenartigen Abschnitt (158) des Drehhebels (19) ausgebildet sind.

17. Scheibenbremse nach einem der Ansprüche 15 oder 16, **dadurch gekennzeichnet, daß** im traversenförmigen Abschnitt (158) des Drehhebels (19) zwei äußere Ausnehmungen (160a,b) - Exzenterkalotten - auf der der Ausnehmung (150) für die Aufnahme der Kolbenstange gegenüberliegenden Seite des Drehhebels (19) und zwei relativ zu den Ausnehmungen (160a, b) weiter innen liegende Ausnehmungen (162a,b) - Hebelkalotten - auf der gegenüberliegenden Seite des traversenförmigen Abschnittes (150) angeordnet sind.

18. Scheibenbremse nach einem der Ansprüche 15 bis 17, **dadurch gekennzeichnet, daß** die kugelartigen Lagerelemente (56a, 56b und 178a, 178b) am traversenförmigen Abschnitt (158) des Drehhebels (19) an gegenüberliegenden Seiten mit entgegengesetzter Druckrichtung angeordnet sind.

19. Scheibenbremse nach einem der Ansprüche 15 bis 18, **dadurch gekennzeichnet, daß** die kugelartigen Lagerelemente (56a, 56b und 178a, 178b) mit ihren Kugelmittelpunkten sowohl in Längsrichtung des traversenartigen Abschnittes (158) - und somit senkrecht zum Hebelarm A-A - parallel zur Bremsscheibe (1) als auch quer zu dieser Längsrichtung voneinander beabstandet angeordnet sind.

20. Scheibenbremse nach einem der Ansprüch 18 oder 19, **dadurch gekennzeichnet, daß** die einander gegenüberliegenden kugelartigen Lagerelemente oder Lagerkugeln (56a, 56b und 178a, 178b) der Hebel- und Exzenterlager jeweils im traversenartigen Abschnitt (158) des Drehhebels (19) derart angeordnet sind, daß die Kugelmittelpunkte nahezu oder vollständig auf einer Verbindungsebene mit dem Drehpunkt der Betätigung am Hebelarm liegen.

21. Scheibenbremse nach einem der Ansprüche 18 oder 19, **dadurch gekennzeichnet, daß** die Position des Exzenterlagers zur Erzielung einer definierten Veränderung des Übersetzungsverhältnisses in Abhängigkeit von der Hebelstellung um einen vorgegebenen Betrag von der Verbindungsebene des Mittelpunktes der Hebelbetätigung zu den Hebellagermittelpunkten versetzt ist.

22. Scheibenbremse nach einem der vorstehenden Ansprüche, **dadurch gekennzeichnet, daß** die Gleitlagerschalen (170, 172) im Drehhebel (19) oder im jeweils abgewandten Teil des Sattels (1) oder der Zwischenstücke (180) oder auf beiden Seiten der kugelartigen Lagerelemente oder Lagerkugeln (56, 178) angeordnet sind.

23. Scheibenbremse nach einem der vorstehenden Ansprüche, **dadurch gekennzeichnet, daß** die kugelartigen Lagerelemente oder Lagerkugeln (56, 178) im jeweils von der Gleitlagerschale (170, 172) abgewandten Bauteil in einer Kalotte mit einem Kalottendurchmesser aufgenommen sind, der um einen vorgegebenen Betrag größer ist als der Kugeldurchmesser, so daß die kugelartigen Lagerelemente (56, 178) bei der Betätigung des Drehhebels (19) neben der Gleitbewegung in den Lagerschale (170, 172) auch eine begrenzte Rollbewegung in der gegenüberliegenden Aufnahmekalotte ausführen.

24. Scheibenbremse nach einem der Ansprüche 17 bis 23, **dadurch gekennzeichnet, daß** die Hebelkalotte (162) torusförmig ausgebildet ist.

25. Scheibenbremse nach einem der Ansprüche 17 bis 24, **dadurch gekennzeichnet, daß** die Hebelkalotte (162) einen größeren Kalottendurchmesser in Schwenkrichtung als quer zu dieser Schwenkrichtung aufweist.

26. Scheibenbremse nach einem der Ansprüche 15-25, **dadurch gekennzeichnet, daß** bei einer Bremsenauslegung mit jeweils nur einem Druckstück bzw. nur einem Nachstell-Drehantrieb auf einer oder beiden Seiten der Bremsscheibe (3) der Drehhebel (19) mit zwei Hebellagern an den Enden des traversenartigen Abschnittes (158) und mit nur einem Exzenterlager in der Mitte versehen ist.

27. Scheibenbremse nach einem der Ansprüche 17 bis 26, **dadurch gekennzeichnet, daß** die im wesentlichen kugelförmigen Lagerelemente (56, 178) und/oder deren Lagerkalotten (162, 160) eine gegenüber einer Kugelgeometrie abgeflachte, elliptische Formgebung aufweisen.

28. Scheibenbremse nach einem der vorstehenden Ansprüche, **dadurch gekennzeichnet, daß** die im wesentlichen kugelförmigen Lagerelemente (56, 178) und deren Aufnahmen (235, 236) miteinander korrespondierende Einrichtungen zur Verdrehsicherung aufweisen.

29. Scheibenbremse nach Anspruch 28, **dadurch gekennzeichnet, daß** die Einrichtungen zur Verdrehsicherung als stumpf- oder reibgeschweißter Sitz (240) ausgebildet sind.

30. Scheibenbremse nach Anspruch 28 oder 29, **dadurch gekennzeichnet, daß** die Einrichtungen zur Verdrehsicherung als Spannstift oder Spannhülse (241) ausgebildet sind.

31. Scheibenbremse nach einem der vorstehenden Ansprüche, **dadurch gekennzeichnet, daß** die im wesentlichen kugelförmigen Lagerelemente (56, 178) und deren Aufnahmen als Einrichtung zur Verdrehsicherung an deren zueinander weisenden Seiten miteinander korrespondierende verdrehsichere Geometriegebungen aufweisen.

32. Scheibenbremse nach einem der vorstehenden Ansprüche, **dadurch gekennzeichnet, daß** die im wesentlichen kugelförmigen Lagerelemente (56, 178) und deren Aufnahmen (235, 236) als Einrichtung zur Verdrehsicherung an deren zueinander weisenden Seiten miteinander korrespondierende Abflachungen und/oder Vertiefungen und Vorsprünge (242, 243) aufweisen.

33. Scheibenbremse nach Anspruch 32, **dadurch gekennzeichnet, daß** die Vertiefungen/Vorsprünge (242, 243) konkav/konvex oder kugelschalenförmig ausgebildet sind.

34. Scheibenbremse nach einem der vorstehenden Ansprüche, **dadurch gekennzeichnet, daß** an den Lagerkalotten (160) ein Abstreifer (239) angeordnet ist.

35. Scheibenbremse nach einem der vorstehenden Ansprüche, **dadurch gekennzeichnet, daß** zwischen den im wesentlichen kugelförmigen Lagerelementen (56, 178) und deren Aufnahmen (235, 236) ein Spiel ausgebildet ist.

36. Scheibenbremse nach einem der vorstehenden Ansprüche, **dadurch gekennzeichnet, daß** lagefixierende, miteinander korrespondierende Vorsprünge (244) und Ausnehmungen zwischen den im wesentlichen kugelförmigen Lagerelementen (56, 178) und den Lagerschalen (170, 172) ausgebildet sind.

37. Scheibenbremse nach einem der vorstehenden Ansprüche, **dadurch gekennzeichnet, daß** in den Lagerschalen Ausprägungen (245) ausgebildet sind, welche an ihrer von den Lagerkugeln abgewandten Seite in korrespondierende Ausnehmungen (246) im korrespondierenden Bauelement (Drehhebel 19) eingreifen.

38. Scheibenbremse nach einem der vorstehenden Ansprüche, **dadurch gekennzeichnet, daß** in den Lagerschalen Bohrungen (248) ausgebildet sind, welche in Fettaufnahmerillen (249) im korrespondierenden Bauteil (Drehhebel 19) münden.

39. Scheibenbremse nach einem der vorstehenden Ansprüche, **dadurch gekennzeichnet, daß** der Bremssattel (1) mit einem unteren Ansatz (250, 260) versehen ist, der mittels eines Bolzens (252) mit dem Achsflansch (11) oder Bremsträger verschraubt ist.

40. Scheibenbremse nach Anspruch 39, **dadurch gekennzeichnet, daß** der Ansatz (260) armartig ausgebildet ist.

41. Scheibenbremse nach einem der Ansprüche 39 oder 40, **dadurch gekennzeichnet, daß** der Ansatz (250, 260) mit einer Bohrung zur Aufnahme wenigstens einer Lagerbuchse versehen ist.

42. Scheibenbremse nach Anspruch 41, **dadurch gekennzeichnet, daß** die Lagerbuchse als Gummilagerbuchse ausgebildet ist.

43. Scheibenbremse nach einem der Ansprüche 41 oder 42, **dadurch gekennzeichnet, daß** die Lagerbuchse von einem mit dem Bremsträger oder Achsflansch verbundenen Bolzen durchsetzt ist.

44. Scheibenbremse nach einem der Ansprüche 41 bis 43, **dadurch gekennzeichnet, daß** der Bremssattel in der Lagerbuchse um den Betrag des halben oder ganzen Arbeitshubes verschieb- oder verschwenkbar ist

## Claims

1. A disc brake, in particular for utility vehicles, in which an electric-motor or pneumatically driven force generating device is positioned on only one side of a brake disc (3), having
a) a brake calliper (1) which extends over a brake disc (3),
b) at least one application device (13) positioned on the brake calliper for applying at least one brake pad (7) in the direction thereof,
c) and an adjusting system positioned in the brake calliper (1) for compensating for brake pad and/or disc wear by adjusting the distance between the brake pad (7) and the brake disc (3),
d) the adjusting system having at least one adjusting device, in particular a rotary device,
e) the application system positioned in the brake calliper (1) having a rotary lever (19) which can be actuated by a rod,
**characterised in that**
f) the rotary lever (19) has at one of its ends a recess (150) for receiving the end of the rod and in the end area facing away from said recess (150) on two of its outer faces recesses (160, 162) into which it is possible to place cap-shaped bearing shells (170, 172) and/or spherical bearing elements (56, 178) for mounting the rotary lever (19) by means of which the rotary lever (19) is mounted on the brake calliper (1) and on at least one thrust piece (23) in order to slide the brake pad (7) in the direction of the brake disc (3).

2. A disc brake in accordance with claim 1,
**characterised in that**
the adjusting system has at least one or more of the adjusting devices on each side of the brake disc (3) such that the axial distances between the two brake pads (5, 7) and the brake disc (3) on both sides of the brake disc can be adjusted.

3. A disc brake in accordance with claim 1 or 2,
**characterised in that**
a) one of the application devices (13, 17) for applying the brake pads (5, 7) is positioned on either side of the brake disc (3),
b) the application devices (13, 17) on either side of the brake disc (3) being coupled together by a coupling device in such a manner that they are only able to move synchronously, and
c) the brake calliper (1) being designed as a fixed calliper which is unable to move in relation to the axle flange (11) (Fig. 1a).

4. A disc brake in accordance with claim 2 or 3,
**characterised in that**
the brake calliper is fixed directly to the axle flange (11) or to an adapter by one or more bolts (9).

5. A disc brake in accordance with one of the preceding claims,
**characterised in that**
the reaction force on the side of the brake facing away from the application side is generated by
- sliding the brake calliper (1) and/or,
- pivoting the brake calliper (1) and/or
- sliding the brake disc (3),
the sliding and/or pivoting movement being essentially able to bridge only half the force stroke and/or the reaction force on the side of the brake facing away from the application side being generated by the elastic deformation of the brake calliper and/or the brake disc and/or an element (22) between the brake calliper (1) and the axle flange (11).

6. A disc brake in accordance with claim 5,
**characterised in that**
the distance which can be bridged by the sliding and/or pivoting movement of the brake calliper < 4 mm.

7. A disc brake in accordance with one of claims 4 to 6,
**characterised in that**
the brake disc is designed as a sliding disc which is mounted on a brake disc hub such that it is able to slide in such a manner that the sliding movement is able to cover a maximum slide path limited to half the force stroke.

8. A disc brake in accordance with one of claims 4 to 7,
**characterised in that**
the brake calliper (1) is designed as a sliding calliper which
- has a sliding calliper bearing,
- can be attached directly to the axle flange (11),
- is dimensioned such that it is possible to bridge a slide path limited to half the force stroke.

9. A disc brake in accordance with one of claims 4 to 7,
**characterised in that**
the brake calliper (1) is designed as a pivoting calliper which
- has a pivoting calliper bearing,
- can preferably be attached directly to the axle flange (11),
- and with which it is possible to bridge a pivoting angle which offsets the brake calliper in relation to the brake disc by essentially half the force stroke.

10. A disc brake in accordance with one of the preceding claims,
**characterised in that**
the rotary adjusting devices each have at least one adjusting sleeve (21) and one thrust piece (23) which can be screwed into said adjusting sleeve (21).

11. A disc brake in accordance with one of the preceding claims,
**characterised in that**
the adjusting system also has on one or both sides of the brake disc an adjuster drive which is designed as an electric motor or as a mechanical coupling to the application device.

12. A disc brake in accordance with one of the preceding claims,
**characterised in that**
the adjusting system on one or both sides of the brake disc is designed as a pre-assembled adjuster module (50, 100).

13. A disc brake in accordance with one of the preceding claims,
**characterised in that**
the rotary lever (19) is mounted directly or on further intermediate elements on the brake calliper (1) - lever bearing - and directly or on further intermediate elements on the at least one thrust piece (23) - eccentric bearing.

14. A disc brake in accordance with one of the preceding claims,
**characterised in that**
the bearing shells (170, 172) are designed as sliding bearing shells.

15. A disc brake in accordance with one of the preceding claims,
**characterised in that**
the rotary lever (19) widens from the area of the upper recess (150) to a cross-piece-like section (158).

16. A disc brake in accordance with claim 15,
**characterised in that**
the two bearing pairs - lever bearings and eccentric bearing to the thrust pieces - are formed in the cross-piece-like section (158) of the rotary lever (19) which is positioned at right angles to the lever arm (A-A).

17. A disc brake in accordance with one of claims 15 or 16,
**characterised in that**
in the cross-piece-like section (158) of the rotary lever (19) two outer recesses (160a, b) - eccentric caps - are positioned on the side of the rotary lever (19) opposite the recess (150) for receiving the piston rod, and two recesses (162a, b) - lever caps - are positioned on the inside of the recesses (160a, b) on the opposite side of the cross-piece-like section (150).

18. A disc brake in accordance with one of claims 15 to 17,
**characterised in that**
the spherical bearing elements (56a, 56b and 178a, 178b) are positioned on opposite sides of the cross-piece-like section (158) of the rotary lever (19) with opposite pressure directions.

19. A disc brake in accordance with one of claims 15 to 18,
**characterised in that**
the sphere centre points of the spherical bearing elements (56a, 56b and 178a, 178b) are spaced a certain distance apart along the length of the cross-piece-like section (158) - and thus perpendicular to the lever arm A-A - parallel to the brake disc (1) and at right angles to this length.

20. A disc brake in accordance with one of claims 18 or 19,
**characterised in that**
the opposing spherical bearing elements or ball bearings (56a, 56b and 178a, 178b) of the lever and eccentric bearings are positioned in the cross-piece-like section (158) of the rotary lever (19) in such a manner that the sphere centre points lie almost or completely in a connecting plane with the pivot point of the actuation of the lever arm.

21. A disc brake in accordance with one of claims 18 or 19,
**characterised in that**
in order to achieve a defined change in the transmission ratio dependent on the lever position the position of the eccentric bearing is offset by a predetermined amount from the connecting plane of the centre point of the lever action to the lever bearing centre points.

22. A disc brake in accordance with one of the preceding claims,
**characterised in that**
the sliding bearing shells (170, 172) are positioned in the rotary lever (19) or in the opposite part of the calliper (1) or the transition pieces (180) or on both sides of the spherical bearing elements or ball bearings (56, 178).

23. A disc brake in accordance with one of the preceding claims,
**characterised in that**
the spherical bearing elements or ball bearings (56, 178) are received in the component facing away from the sliding bearing shells (170, 172) in a spherical cap with a spherical cap diameter which is a predetermined amount greater than the ball diameter such that when the rotary lever (19) is actuated the spherical bearing elements or ball bearings (56, 178) perform a limited rolling movement in the opposite spherical receiving cap in addition to the sliding movement into the sliding bearing shells (170, 172).

24. A disc brake in accordance with one of claims 17 to 23,
**characterised in that**
the lever spherical cap (162) is toroid in design.

25. A disc brake in accordance with one of claims 17 to 24,
**characterised in that**
the lever spherical cap (162) has a greater spherical cap diameter in the direction of pivoting than at right angles to this direction of pivoting.

26. A disc brake in accordance with one of claims 15 to 25,
**characterised in that**
in a brake design with only one thrust piece or only one rotary adjusting drive on one or both sides of the brake disc (3), the rotary lever (19) is provided with two lever bearings on the ends of the cross-piece-like section (158) and with only one eccentric bearing in the centre.

27. A disc brake in accordance with one of claims 17 to 26,
**characterised in that**
the essentially spherical bearing elements (56, 178) and/or their bearing shell caps (162, 160) have a shape which rather than being spherical is flattened and elliptical.

28. A disc brake in accordance with one of the preceding claims,
**characterised in that**
the essentially spherical bearing elements (56, 178) and their receivers (235, 236) have mutually corresponding anti-rotation devices.

29. A disc brake in accordance with claim 28,
**characterised in that**
the anti-rotation devices are designed as butt- or friction-welded seats (240).

30. A disc brake in accordance with claim 28 or 29,
**characterised in that**
the anti-rotation devices are designed as clamping pins or clamping sleeves (241).

31. A disc brake in accordance with one of the preceding claims,
**characterised in that**
the essentially spherical bearing elements (56, 178) and their receivers have mutually corresponding anti-rotation geometrical forms at the ends facing each other as anti-rotation devices.

32. A disc brake in accordance with one of the preceding claims,
**characterised in that**
the essentially spherical bearing elements (56, 178) and their receivers (235, 236) have mutually corresponding flattened sections and/or indentations and projections (242/243) at the ends facing each other as anti-rotation devices.

33. A disc brake in accordance with claim 32,
**characterised in that**
the indentations/projections (242/243) are concave/convex or shaped like spherical shells.

34. A disc brake in accordance with one of the preceding claims,
**characterised in that**
a strip (239) is positioned on the spherical bearing caps (160).

35. A disc brake in accordance with one of the preceding claims,
**characterised in that**
play is provided between the essentially spherical bearing elements (56, 178) and their receivers (235, 236).

36. A disc brake in accordance with one of the preceding claims,
**characterised in that**
position-fixing, mutually corresponding projections (244) and recesses are formed between the essentially spherical bearing elements (56, 178) and the bearing shells (170, 172).

37. A disc brake in accordance with one of the preceding claims,
**characterised in that**
formed in the bearing shells are bosses (245) whose sides facing away from the bearing shells engage in corresponding recesses (246) in the corresponding component (rotary lever (19)).

38. A disc brake in accordance with one of the preceding claims,
**characterised in that**
formed in the bearing shells are holes (248) which lead to lubricant receiving channels (249) in the corresponding component (rotary lever (19)).

39. A disc brake in accordance with one of the preceding claims,
**characterised in that**
the brake calliper (1) is provided with a lower projection (250, 260) which is screwed to the axle flange (11) or the adapter by a bolt (252).

40. A disc brake in accordance with claim 39,
**characterised in that**
the projection (260) is formed in the shape of an arm.

41. A disc brake in accordance with one of claims 39 or 40,
**characterised in that**
the projection (250, 260) is provided with a hole for receiving at least one bearing bush.

42. A disc brake in accordance with claim 41,
**characterised in that**
the bearing bush is designed as a rubber bearing bush.

43. A disc brake in accordance with one of claims 41 or 42,
**characterised in that**
a bolt connected to the adapter or the axle flange passes through the bearing bush.

44. A disc brake in accordance with one of claims 41 to 43,
**characterised in that**
the brake calliper can be slid or pivoted in the bearing bush by the amount of half or the whole working stroke.

## Revendications

1. Frein à disque, en particulier pour un véhicule utilitaire, dans lequel un dispositif électromoteur ou pneumatique à engendrer une force n'est disposé que d'un seul côté d'un disque de frein (3), comprenant
a) un étrier de frein (1) chevauchant ledit disque de frein (3)
b) au moins un dispositif de serrage de frein (13) disposé audit étrier de frein à serrer au moins une garniture de frein (7) le long de la direction du dispositif,
c) ainsi qu'un système de rattrapage disposé dans ledit étrier de frein (1) à compenser l'usure à la garniture de frein et/ou du disque par rattrapage de l'écart entre ladite garniture de frein (7) et ledit disque de frein (3),
d) dans lequel ledit système de rattrapage comprend au moins un moyen de rattrapage, en particulier un moyen rotatif,
e) audit système de serrage de frein disposé dans ledit étrier de frein (1) comprenant un levier tournant (19) commandable au moyen d'une tige,
**caractérisé en ce**
f) **que** ledit levier tournant (19) comprend un évidement (150) à une de ses extrémités à recevoir l'extrémité de ladite tige et présente, à sa région terminale opposée audit évidement (150) et à deux de ses côtés extérieurs, des évidements (160, 162), dans lesquels on peut insérer des coquilles de palier du type de calotte et/ou des éléments de coussinet du type de bille (56, 178) pour le logement dudit levier tournant (19), moyennant desquelles ledit levier tournant (19) est logé audit étrier de frein (1) et à au moins une plaque d'appui (23) à déplacer ladite garniture de frein (7) en une direction vers ledit disque de frein (3).

2. Frein à disque selon la revendication 1, **caractérisé en ce que** ledit système de rattrapage comprend au moins un ou plusieurs desdits moyens de rattrapage de chaque côté dudit disque de frein (3) d'une telle manière, que les écarts axiaux entre lesdites deux garnitures de frein (5, 7) et dudit disque de frein des deux côtés dudit disque de frein soient réglables.

3. Frein à disque selon la revendication 1 ou 2, **caractérisé en ce**
a) **qu'**un desdits moyens de serrage de frein (13, 17) respectif est disposé de chaque côté dudit disque de frein (3) afin de serrer lesdites garnitures de frein (5, 7),
b) dans lequel lesdits moyens de serrage de frein (13, 17) des deux côtés du disque de frein (3) sont accouplés l'un à l'autre d'une telle manière, qu'ils soient mobiles en synchronisme exclusivement, et
c) dans lequel ledit étrier de frein (1) est conçu sous forme d'un étrier stationnaire, non apte à être déplacé relativement à la flasque de l'essieu (11) (fig. 1a).

4. Frein à disque selon la revendication 2 ou 3, **caractérisé en ce que** ledit étrier de frein est fixé directement à ladite flasque de l'essieu (11) ou une flasque de frein moyennant un ou plusieurs boulons (9).

5. Frein à disque selon une quelconque des revendications précédentes, **caractérisé en ce que** la génération de la force de réaction se fait du côté du frein, qui est opposé au côté de serrage de frein,
- en déplaçant ledit étrier de frein (1) et/ou
- en pivotant ledit étrier de frein (1) et/ou
- en déplaçant ledit disque de frein (3),
dans lequel le mouvement de déplacement et/ou le mouvement pivotant ne permet essentiellement que le pontage de la distance de la demi course de force seulement, et/ou que la génération de la force de réaction se fait du côté de frein, qui est opposé au côté de serrage de frein, par déformation élastique dudit étrier de frein et/ou du disque de frein et/ou d'un élément (292) entre ledit étrier de frein (1) et ladite flasque de l'essieu (11).

6. Frein à disque selon la revendication 5, **caractérisé en ce que** la distance pontable par le mouvement de déplacement et/ou le mouvement pivotant dudit étrier de frein est < 4 mm.

7. Frein à disque selon une quelconque des revendications 4 à 6, **caractérisé en ce que** ledit disque de frein est configuré sous forme d'un disque coulissant, qui est guidé, de façon déplaçable, sur un moyeu du disque de frein d'une telle manière, qu'une distance de déplacement limitée à la demi course de force au maximum soit réalisable par le déplacement.

8. Frein à disque selon une quelconque des revendications 4 à 7, **caractérisé en ce que** ledit étrier (1) est configuré sous forme d'un étrier coulissant, qui
- comprend un palier d'étrier coulissant,
- est apte à être fixé directement à ladite flasque de l'essieu (11),
- est dimensionné d'une telle manière, qu'une distance de déplacement limitée à la demi course de force soit pontable.

9. Frein à disque selon une quelconque des revendications 4 à 7, **caractérisé en ce que** ledit étrier de frein (1) et configuré sous forme d'un étrier pivotant, qui
- comprend un palier d'étrier pivotant,
- est apte à être fixé directement à ladite flasque de l'essieu (11), de préférence,
- et qui se prête à ponter un angle de pivotement, qui déplace ledit étrier de frein relativement audit disque de frein essentiellement par la valeur de la demi course de force.

10. Frein à disque selon une quelconque des revendications précédentes, **caractérisé en ce que** chacun desdits moyens rotatifs de rattrapage comprend au moins une douille de rattrapage (21) et un élément presseur (23) apte à être vissé dans cette douille.

11. Frein à disque selon une quelconque des revendications précédentes, **caractérisé en ce que** ledit système de rattrapage comprend au plus un système d'entraînement d'un ou des deux côtés dudit disque de frein, qui est configuré sous forme d'un électromoteur ou d'un coupleur mécanique pour le couplage audit moyen de serrage de frein.

12. Frein à disque selon une quelconque des revendications précédentes, **caractérisé en ce que** ledit système de rattrapage est configuré sous forme d'un module de rattrapage (50, 100) prémontable d'un ou des deux côtés dudit disque de frein.

13. Frein à disque selon une quelconque des revendications précédentes, **caractérisé en ce que** ledit levier tournant (10) est logé directement ou via des autres éléments interposés audit étrier de frein (1) - palier de levier - et directement ou via des autres éléments interposés audit au moins un élément presseur (23) - palier excentrique.

14. Frein à disque selon une quelconque des revendications précédentes, **caractérisé en ce que** lesdites coquilles de palier (170, 172) sont configurées sous forme de coquilles de palier lisse.

15. Frein à disque selon une quelconque des revendications précédentes, **caractérisé en ce que** ledit levier pivotant (10) s'élargit à partir dudit évidement supérieur (150) vers une partie du type de traverse (158).

16. Frein à disque selon la revendication 15, **caractérisé en ce que** les deux paires de paliers - paliers de levier et paliers excentriques vers les éléments presseurs - sont formées dans ladite partie (158) du type de traverse dudit levier pivotant (19), qui est disposée à un angle droit relativement au bras de levier (A-A).

17. Frein à disque selon une quelconque des revendications 15 ou 16, **caractérisé en ce que** deux évidement extérieurs (160a, b) - calottes excentriques - sont disposés dans ladite partie du type de traverse (158) afin de recevoir le coté dudit levier tournant, qui est opposé à la tige de piston, et deux évidements (162a, b) - calottes de levier - plus déplacés vers l'intérieur, relativement auxdits évidements (160a, b), du côté opposé de ladite partie du type de traverse (158).

18. Frein à disque selon une quelconque des revendications 15 à 17, **caractérisé en ce que** lesdits éléments de coussinet du type de bille (56a, 56b et 178a, 178b) sont disposés à ladite partie du type de traverse (158) dudit levier pivotant (19) aux côtés opposés à une direction de pression inverse.

19. Frein à disque selon une quelconque des revendications 15 à 18, **caractérisé en ce que** lesdits éléments de coussinet du type de bille (56a, 56b et 178a, 178) sont disposés, par leur centres de bille, non seulement en parallèle audit disque de frein (1) - et ainsi en position orthogonale audit bras de levier A-A - mais aussi en travers de cette direction longitudinale, en étant écarté l'un de l'autre.

20. Frein à disque selon une quelconque des revendications 18 ou 18, **caractérisé en ce que** chacun desdits éléments de coussinet du type de bille ou billes de palier (56a, 56b et 178a, 178b) opposés l'un à l'autre des paliers de levier et excentrique est disposé dans la partie respective du type de traverse (158) dudit levier tournant (19) d'une telle manière, que les centres de bille se trouvent presque complètement ou complètement dans un plan de connexion au centre de rotation de la commande au bras de levier.

21. Frein à disque selon une quelconque des revendications 18 ou 19, **caractérisé en ce que** la position du palier excentrique est décalée, par une valeur prédéterminée, dudit plan de connexion entre le centre de la commande du levier et les centres de palier de levier, afin d'achever une variation définie du rapport de multiplication ou démultiplication en fonction de la position du levier.

22. Frein à disque selon une quelconque des revendications précédentes, **caractérisé en ce que** lesdites coquilles de palier (170, 172) sont disposées dans ledit levier pivotant (19) ou dans la partie respective opposée dudit étrier (1) ou desdits éléments interposés (180) ou des deux côtés desdits éléments de coussinet du type de bille ou des billes de palier (56, 178).

23. Frein à disque selon une quelconque des revendications précédentes, **caractérisé en ce que** chacun desdits éléments de coussinet du type de bille ou des billes de palier (56, 178) est reçu dans le composant respectif opposé à ladite coquille de palier lisse (170, 172) dans une calotte ayant un diamètre de calotte, qui dépasse le diamètre de bille par une valeur prédéterminée, d'une telle façon, qu'à la commande dudit levier tournant (19), lesdits éléments de coussinet du type de bille (56, 178) réalisent aussi un mouvement roulant limité dans la calotte de réception opposée, au plus du mouvement glissant dans ladite coquille de coussinet (170, 172).

24. Frein à disque selon une quelconque des revendications 17 à 23, **caractérisé en ce que** ladite calotte de levier (162) présente une configuration torique.

25. Frein à disque selon une quelconque des revendications 17 à 24, **caractérisé en ce que** ladite calotte de levier (162) présente un diamètre de calotte plus grand en sens de pivotement qu'en sens en travers de cette direction de pivotement.

26. Frein à disque selon une quelconque des revendications 15 à 25, **caractérisé en ce qu'**à la conception du frein à un seul élément presseur respectif ou à un seul système d'entraînement de rattrapage respectif d'un ou des deux côtés dudit disque de frein (3), ledit levier tournant (19) est pourvu de deux paliers de levier aux extrémités de ladite partie du type de traverse (158) et d'un seul palier excentrique au centre.

27. Frein à disque selon une quelconque des revendications 17 à 26, **caractérisé en ce que** lesdits éléments de coussinet essentiellement du type de bille (56, 178) et/ou leur calottes de palier (162) présentent une formation elliptique aplatie relativement d'une géométrie sphérique.

28. Frein à disque selon une quelconque des revendications précédentes, **caractérisé en ce que** lesdits éléments de coussinet essentiellement du type de bille (56, 178) et les éléments les recevant (235, 236) présentent des moyens en correspondance l'un avec l'autre afin d'empêcher une rotation.

29. Frein à disque selon la revendication 28, **caractérisé en ce que** lesdits moyens à empêcher une rotation sont configurés sous forme d'un siège abouché ou soudé par friction (240).

30. Frein à disque selon la revendication 28 ou 29, **caractérisé en ce que** lesdits moyens à empêcher une rotation sont configurés sous forme d'une goupille de serrage ou d'une douille de serrage (241).

31. Frein à disque selon une quelconque des revendications précédentes, **caractérisé en ce que** lesdits éléments de coussinet essentiellement du type de bille (56, 178) et les éléments les recevant, en tant que moyen à empêcher une rotation, présentent des formation géométriques l'une correspondance avec l'autre à leurs cotés l'une en face à l'autre.

32. Frein à disque selon une quelconque des revendications précédentes, **caractérisé en ce que** lesdits éléments de coussinet essentiellement du type de bille (56, 178) et les éléments les recevant (235, 236), en tant que moyen à empêcher une rotation, présentent des parties aplaties, l'une en correspondance avec l'autre, et/ou des creux et saillies (242, 243) à leurs côtés l'une en face à l'autre.

33. Frein à disque selon la revendication 32, **caractérisé en ce que** lesdits creux/saillies (242, 243) ont une configuration concave/convexe ou sous forme d'une rotule.

34. Frein à disque selon une quelconque des revendications précédentes, **caractérisé en ce qu'**un stripeur est disposé auxdites calottes de coussinet (160).

35. Frein à disque selon une quelconque des revendications précédentes, **caractérisé en ce qu'**un jeu est formé entre lesdits éléments de coussinet essentiellement du type de bille (56, 178) et les éléments les recevant (235, 236).

36. Frein à disque selon une quelconque des revendications précédentes, **caractérisé en ce que** des saillies (244) et creux, l'un en correspondance avec l'autre, sont formé entre lesdits éléments de coussinet essentiellement du type de bille (56, 178) et lesdites coquilles de palier (1709, 172) pour la fixation en position.

37. Frein à disque selon une quelconque des revendications précédentes, **caractérisé en ce que** des formations frappées (245) sont formées dans lesdites coquilles de palier, qui se trouvent en prise dans des creux correspondants (246) dans le composant correspondant (levier tournant 19) de leur côté opposé auxdites billes de palier.

38. Frein à disque selon une quelconque des revendications précédentes, **caractérisé en ce que** des alésages sont formés dans lesdites coquilles de palier, qui s'ouvrent dans des gorges réceptrices de graisse (249) dans le composant correspondant (levier tournant 19).

39. Frein à disque selon une quelconque des revendications précédentes, **caractérisé en ce que** ledit étrier de frein (1) est pourvu d'un bout (250, 260) inférieur, qui este vissé, moyennant un boulon (252) à ladite flasque de l'essieu (11) ou ladite flasque de frein.

40. Frein à disque selon la revendication 39, **caractérisé en ce que** ledit bout (260) a une configuration du type de bras.

41. Frein à disque selon la revendication 39 ou 40, **caractérisé en ce que** ledit bout (250, 260) est muni d'un alésage à recevoir au moins une douille de coussinet.

42. Frein à disque selon la revendication 41, **caractérisé en ce que** ladite douille de coussinet est configuré en tant que douille de coussinet en caoutchouc.

43. Frein à disque selon une quelconque des revendications 41 ou 42, **caractérisé en ce que** ladite douille de coussinet est traversée par un boulon relié à ladite flasque de frein ou ladite flasque de l'essieu.

44. Frein à disque selon une quelconque des revendications 41 à 43, **caractérisé en ce que** ledit étrier de frein est déplaçable ou pivotable dans ladite douille de coussinet par la valeur de la demi course ou de la course complète de travail.
